# EUROPÄISCHE PATENTSCHRIFT

(11) **EP 3 061 594 B1**
(45) Veröffentlichungstag und Bekanntmachung des Hinweises auf die Patenterteilung: **11.04.2018**
(21) Anmeldenummer: 16156947.0
(22) Anmeldetag: 23.02.2016
(51) Int. Cl.: B29C 70/30, B60B 5/02, B29C 70/46, B33Y 30/00, B32B 37/14, B60B 1/06, B60B 21/02

(54) **FAHRRADLAUFRAD UND VERFAHREN ZU DESSEN HERSTELLUNG**
BICYCLE WHEEL AND METHOD FOR ITS MANUFACTURE
ROUE DE ROULEMENT DE VELO ET PROCÉDÉ DE FABRICATION

(30) Priorität: 24.02.2015 DE 202015001363 U; 24.02.2015 CH 2462015
(43) Veröffentlichungstag der Anmeldung: 31.08.2016
(73) Patentinhaber: Scott Sports S.A., 1762 Givisiez (CH)
(72) Erfinder: HABERMACHER, Timothy, 8046 Zürich (CH)
(74) Vertreter: Klunker IP Patentanwälte PartG mbB

(56) Entgegenhaltungen:
- EP-A1- 1 985 434
- DE-A1-102008 007 722
- US-A- 5 104 199

## Beschreibung

### TECHNISCHES GEBIET

Die vorliegende Erfindung bezieht sich auf ein Verfahren zur Herstellung eines Fahrradlaufrads. Des Weiteren bezieht sich die vorliegende Erfindung auf ein Fahrradlaufrad.

### STAND DER TECHNIK

In den letzten Jahren wurden zahlreiche Entwicklungen im Bereich Fahrradlaufräder, insbesondere für den Radrennsport hervorgebracht. In diesem Sportbereich spielen Gewicht, Steifigkeit des Materials und die Aerodynamik, welche insbesondere auf die Feigengeometrie zurückzuführen ist, eine wesentliche Rolle. In seinen Grundelementen besteht ein Laufrad aus Nabe, den Speichen und der Felge. Dies gilt ebenfalls für Laufräder aus Faserverbundwerkstoff, insbesondere aus Carbon. Grundsätzlich wird im Bereich der Fahrradlaufräder, welche aus Faserverbundwerkstoff hergestellt sind, zwischen Scheibenrädern, Rädern mit massiven Speichen, mit Druckspeichen und Rädern mit vorgespannten Speichen unterschieden. Gemäss der vorliegenden Erfindung werden Laufräder betrachtet, wobei sowohl die Speichen als auch die Felge aus einem Faserverbundwerkstoff, vorzugsweise Carbon, gefertigt sind.

Die EP 2030765 A2 beschreibt ein Verfahren zur Herstellung eines Laufrades für Fahrräder, wobei Felge und Speiche aus einem ausgehärteten Faserverbundstoff, beispielsweise Carbon bestehen und es sich um ein Laufrad mit vorgespannten Speichen handelt. Wie der EP 2030765 A2 zu entnehmen ist, erfolgt die Herstellung der Felge und die anschliessende Befestigung der Speichen in zwei separaten Verfahren. Bereits für die Produktion der Felge ist eine Mehrzahl von Arbeitsschritten erforderlich. Beginnend mit der Herstellung des Felgenaussenprofils, gefolgt vom Bereitstellen eines Kunststoffformelements, welches mit dem Felgenaussenprofil verbunden und mit einer Decklage überzogen wird. Erst in einem zweiten, vom ersten Verfahren unabhängigen Prozess werden die einzelnen Speichen, welche gleich wie Felge aus einem Faserverbundstoff bestehen, an der bereits vorgefertigten Felge befestigt. Das gesamte Laufrad wird zum Abschluss erneut gehärtet um einen festen Verbund zwischen Felge und den Speichen zu gewährleisten.

Weiterhin offenbart auch die EP-A-1985434 die Herstellung von Fahrradlaufrädern aus Verbundwerkstoff.

In diesen Herstellungsverfahren wird wie bei herkömmlichen Prozessen zur Verarbeitung von Faserverbundwerkstoffen laminiert. Unter das Laminieren fällt auch der Arbeitsschritt des Aushärtens. Beispiele für übliche Laminierverfahren sind in DUBBEL, Taschenbuch für Maschinenbau, 22. Auflage, F25 aufgeführt.
Der vorgängig aus dem Stand der Technik beschriebene Prozess hat den Nachteil, dass im Wesentlichen zwei separate Verfahren erforderlich sind, zum Einen die Herstellung der Felge, Speichen und Nabe und zum Anderen die Fixierung der einzelnen Speichen an der Felge und am Zentrumshalter bzw. an der Nabe.
Wie bereits erwähnt, spielt die Aerodynamik im Radsport eine zunehmende Rolle. Im Allgemeinen gilt es den aerodynamischen Widerstand des Laufrads sowie die Robustheit bei Seitenwind zu optimieren. Viele Firmen versuchen daher in diesem Zusammenhang besondere Felgengeometrien zu entwickeln. Die in den letzten Jahren entwickelten Felgenquerschnitte weisen zum einen V-Formen auf, aber auch "bauchigere" Querschnitte gewinnen zunehmend an Bedeutung, um das Ablöseverhalten bei Seitenwind besser kontrollieren zu können. Das Ablöseverhalten der Strömung am Felgenprofil hat grossen Einfluss auf den Fahrkomfort und Linienführung bei Seitenwind.

Die Firma Zipp vermarktet seit Jahren sogenannte Aeroräder, bei welchen die Felge eine Art Golfballoberfläche aufweist.

Als Beispiel für eine aktuelle Entwicklung im Bereich Felgengeometrien für Carbonlaufräder sei an dieser Stelle die US 2014/0292061 A1 der Firma Reynolds Cycling LLC erwähnt. Dieses Dokument offenbart eine asymmetrische Geometrie einer Felge aus Carbonfaser mit vorgespannten Speichen aus Stahl. Ebenfalls beschrieben wird die Herstellung der asymmetrischen Felgengeometrie, insbesondere die Anordnung der Carbonfaserlagen in einer Negativform. Erwähnt werden die Fixierung und das Vorspannen der Speichen. Dieses Dokument zeigt jedoch nicht, wie die einzelnen Speichen an der asymmetrischen Felge zuverlässig fixiert werden und wie der Vorspannprozess der einzelnen Speichen durchgeführt wird.

In der EP 1985465 A1 werden eine Speiche, ein Rad und ein Verfahren zur Herstellung einer Speiche aus einem Faserverbundwerkstoff beschrieben. Bei der Fertigung des Rades erfolgt zuerst die Herstellung der Speichen in einem separaten Prozessschritt im Sinne einer Vorfertigung. Diese Speichen werden dann in einem weiteren Verfahrensschritt mit der ebenfalls vorgefertigten Felge verbunden. Nachteilig an diesem Verfahren ist die Verbindung der Felge und der Speichen in zwei Schritten. Um einen möglichst grossen Halt der Speichen in der Felge zu gewährleisten ist es erforderlich, die Speichen an ihren Enden speziell aufzufächern, sodass eine zuverlässige Verbindung der Speiche mit der Felge überhaupt möglich gemacht werden kann.

Weitere Beispiele für Fahrradlaufräder aus Verbundmaterial, bei welchen vorgespannte Speichen zum Einsatz kommen, finden sich in EP 1795370 A1 und DE 9201 179. In beiden Dokumenten werden die Speichen in einem separaten Prozessschritt in eine Ausnehmung, welche an der Felge sitzt eingesetzt und beispielsweise durch eine Schraubenverbindung befestigt und gespannt.

### DARSTELLUNG DER ERFINDUNG

Es ist eine Aufgabe der Erfindung ein Verfahren zur Herstellung eines Fahrradlaufrads aus einem Faserverbundwerkstoff, sowie ein Fahrradlaufrad zu schaffen, wobei Nachteile bekannter Lösungen mindestens bereichsweise vermieden werden sollen. Ferner soll der Fahrkomfort des Fahrradlaufrads optimiert und der Herstellungsprozess verbessert werden. Das Herstellungsverfahren zeichnet sich insbesondere durch die geringe Anzahl an Prozessschritten aus, wodurch das Risiko möglicher Fehlproduktionen minimiert und Produktionszeiten entsprechend verringert werden können.

Die Aufgabe wird durch die Merkmale der Ansprüche gelöst.

Ist im Folgenden von einem Fahrradlaufrad die Rede, deckt dieser Begriff sowohl das Hinterrad als auch das Vorderrad ab.

Ist im Folgenden vom laminierten Zustand des ersten und zweiten Speichenabschnitts die Rede, definiert dies einen initialen Zustand der Speichen. Für Fahrradlaufräder mit vorgespannten Speichen ist in diesem initialen Zustand der erste und zweite Speichenabschnitt ungespannt und noch nicht mit einer Speichenvorspannkraft beaufschlagt.

Ist im Folgenden für Fahrradlaufräder mit vorgespannten Speichen von einem vorgespannten Zustand des ersten und zweiten Speichenabschnitts die Rede, definiert dies einen finalen Zustand der Speichen, bei welchem die Speichen mit einer Speichenvorspannkraft beaufschlagt, d.h. vorgespannt sind. Die im Anschluss eingesetzte Nabe hält die Speichen im vorgespannten Zustand und daher im finalen Zustand.

Ist im Folgenden von Druckspeichen die Rede, handelt es sich um Speichen die anders als die vorspannten Speichen bei der Herstellung des Fahrradlaufrads im Wesentlichen nicht auf Zug vorbelastet werden. Die Belastung auf Zug bei dieser Art von Speichen erfolgt erst im Einsatz des Fahrradlaufrads auf der Strasse.

Diese Speichen werden ebenfalls von der eingesetzten Nabe in einem finalen Zustand gehalten, jedoch nicht in einem vorgespannten Zustand.

Beim erfindungsgemässen Verfahren zur Herstellung eines Fahrradlaufrads aus einem Faserverbundwerkstoff erfolgt das Laminieren einer Felge, von Speichen, aufweisend je einen ersten und einen zweiten Speichenabschnitt, und eines Zentrums, aufweisend eine erste und zweite Zentrumsscheibe, einstückig in einem Schritt, in dem alle Fasern für Felge, Speichen und Zentrum in einem Prozessschritt in dafür vorgesehenen Formteilen ausgelegt werden und im Anschluss ein Aushärten erfolgt. Nach dem Aushärten wird das Fahrradlaufrad umfassend Felge, Speichen und Zentrum aus den Formteilen entnommen. Die Speichen werden derart laminiert und ausgehärtet, dass der erste und der zweite Speichenabschnitt eine im Wesentlichen gerade Form aufweisen.

In einem Schritt laminieren heisst, dass die Formteile aufweisend die Form für Felge, Speiche und Zentrum in einem Schritt mit Fasern ausgelegt werden, bevor das Aushärten erfolgt. Die Fasern für die Speichen, vorzugsweise unidirektionale Fasern, werden dabei durchgängig von einem ersten Fusspunkt zu einem gegenüberliegenden Fusspunkt verlegt.

Beim erfindungsgemässen Verfahren wird nach Abschluss des Laminierens und des Aushärtens ein Fahrradlaufrad erhalten, welches die Felge, das Zentrum mit einer ersten und einer zweiten Zentrumsscheibe, sowie die noch nicht vorgespannten Speichen einstückig verbunden mit der Felge und den Zentrumsscheiben umfasst.

In einem zweiten Schritt können dann das Vorspannen der Speichen und das Einsetzen einer Nabe erfolgen. Das Vorspannen der Speichen erfolgt vorzugsweise indem das Zentrum bzw. die beiden Zentrumsscheiben in horizontaler Richtung annähernd auf die Grösse der nachfolgend eingesetzten Nabe auseinander gezogen werden, bevor die Nabe eingesetzt wird.

In einer weiteren Ausführungsvariante des erfindungsgemässen Verfahrens wird die Nabe zwischen den beiden Zentrumsscheiben platziert, ohne ein vorgängiges Vorspannen der Speichen. Bei dieser Ausführungsvariante handelt es sich um ein Fahrradlaufrad mit sogenannten Druckspeichen, Speichen die bei der Herstellung des Fahrradlaufrads im Wesentlichen nicht auf Zug vorbelastet werden.

Durch die Fertigung in einem Stück werden zeitraubende weitere Prozessschritte, wie beispielsweise ein Verbinden von vorgefertigten Speichen mit der Felge, vermieden. Weiter werden durch die Fertigung in einem Stück zusätzliche Klebestellen umgangen, welche sich insbesondere in jenen Bereichen des Fahrradlaufrades, wo Bremskräfte wirken, beispielsweise im Bereich der Bremsscheiben-Aufnahme, wo die Bremskräfte über die Speichen in die Felge geleitet werden, als nachteilig erweisen. Des Weiteren wird durch die Vermeidung zusätzlicher Klebestellen Gewicht gespart. Durch die einstückige Herstellung, können insbesondere die Fusspunkte, jene Punkte wo die Speichen in die Felge eintreten, vorteilhaft ausgeführt werden. Vorzugsweise werden die Speichen durchgängig derart laminiert, so dass der Faserverlauf des ersten und zweiten Speichenabschnitts durchgängig zwischen an der Felge angeordneten Fusspunkten verläuft.

Weitere Vorteile, welche insbesondere aus der erfindungsgemässen Herstellung resultieren, sind ein hochpräziser Rundlauf, Laufruhe auch bei hohen Geschwindigkeiten, sowie ein stark verbessertes Rotationsträgheitsmoment.

Das Aushärten kann im erfindungsgemässen Verfahren, vorzugsweise in einem Autoklaven erfolgen. Nachdem die Felge, die Speichen und das Zentrum in den beiden Formteilen laminiert wurden, wird ein formungebundenes Füllmittel, beispielsweise ein Vakuumschlauch oder ein Schaummaterial zwischen die Formteile eingebracht. Beim Anlegen eines Unterdrucks, in dem Luft aus der Form gesaugt wird, vergrössert sich das Volumen des formungebundenen Füllmittels entsprechend und drückt die laminierte Felge in eine gewünschte Position.

Als alternatives Aushärtungsverfahren steht das Spritzpressverfahren zur Verfügung. Bei der Anwendung des Spritzpressverfahren kommen trockene Fasern zum Einsatz, d.h. Fasern, welche beim Einlegen, im Vergleich zu den Prepreg-Fasern noch nicht mit Harz getränkt sind. Beim Spritzpressverfahren werden die Formteile aneinander gepresst und durch Einbringen von Druckluft in ein formungebundenes Füllmittel die Felge in ihre gewünschte Form gebracht. Beim Spritzpressen erfolgen das Einbringen von Harz und der Prozess des Aushärtens in einem Schritt.

Die Ausbildung der Speichen erfolgt, in einer bevorzugten Ausführungsvariante des erfindungsgemässen Verfahrens dadurch, dass auf die laminierten Speichen in den Formteilen eine Stempelform aufgebracht wird. Diese Stempelform, weist Vorsprünge auf die im Wesentlichen formschlüssig mit den Formteilen zusammenwirken und dazu dienen, die Speichen in eine gewünschte Form zu bringen, beispielsweise einen elliptischen Querschnitt auszuformen. Durch diese weitere Form ist es möglich Speichen von hoher Qualität herzustellen. Des Weiteren können die Speichen aus einem unidirektionalen Gelege ohne eine zusätzliche Deckschicht laminiert werden.

Weitere Beispiele für Fasern sind Aramid, Glasfaser und Boron Fasern oder eine Kombination aus den genannten Fasern.

In einer bevorzugten Ausführungsform des erfindungsgemässen Fahrradlaufrads bilden die Speichen eine erste und eine zweite Speichengruppe. Die Speichen der ersten Speichengruppe verlaufen zwischen ersten Fusspunkten angeordnet an der Felge, einer Bremsscheibenseite des Zentrums, wobei das Zentrum vorzugsweise durch zwei gegenüberliegende Zentrumsscheibe ausgebildet ist und zweiten Fusspunkten, welche im Wesentlichen gegenüber den ersten Fusspunkten ebenfalls an der Felge angeordnet sind. Die Speichen der zweiten Speichengruppe verlaufen zwischen weiteren ersten Fusspunkten angeordnet an der Felge, einer Nicht-Bremsscheibenseite des Zentrums, wobei das Zentrum vorzugsweise als weitere Zentrumsscheibe ausgebildet ist und weiteren zweiten Fusspunkten, welche im Wesentlichen den weiteren ersten Fusspunkten gegenüberliegen und ebenfalls an der Felge angeordnet sind. Die Speichen umfassend den ersten und zweiten Speichenabschnitt verlaufen in ihrem Faserverlauf durchgängig zwischen den beiden Fusspunkten.

In einer weiteren bevorzugten Ausführungsform bilden die Speichen eine erste und eine zweite Speichengruppe. Die ersten Speichenabschnitte der Speichen der ersten Speichengruppe verlaufen dabei zwischen den ersten Fusspunkten angeordnet an der Felge an einer Bremsscheibenseite und der Bremsscheibenseite des Zentrums. Die zweiten Speichenabschnitte der Speichen der ersten Speichengruppe verlaufen zwischen der Bremsscheibenseite des Zentrums und zweiten Fusspunkten angeordnet an der Felge an der Bremsscheibenseite. Die ersten Speichenabschnitte der Speichen der zweiten Speichengruppe verlaufen zwischen ersten Fusspunkten angeordnet an der Felge an der NichtBremsscheibenseite und der Nicht-Bremsscheibenseite des Zentrums. Die zweiten Speichenabschnitte der Speichen der zweiten Speichengruppe verlaufen zwischen der Nicht-Bremsscheibenseite des Zentrums und zweiten Fusspunkten angeordnet an der Felge an der Nicht-Bremsscheibenseite.

In einer weiteren Ausführungsform verlaufen die ersten Speichenabschnitte der Speichen der ersten Speichengruppe zwischen ersten Fusspunkten angeordnet an der Felge an einer Nicht-Bremsschreibenseite und der Bremsscheibenseite des Zentrums. Die zweiten Speichenabschnitte der Speichen der ersten Speichengruppe verlaufen zwischen der Bremsscheibenseite des Zentrums und zweiten Fusspunkten angeordnet an der Felge an der Nicht-Bremsscheibenseite. Die ersten Speichenabschnitte der Speichen der zweiten Speichengruppe verlaufen zwischen ersten Fusspunkten angeordnet an der Felge an der Bremsscheibenseite und der Nicht-Bremsscheibenseite des Zentrums. Die zweiten Speichenabschnitte der Speichen der zweiten Speichengruppe verlaufen zwischen der Nicht-Bremsscheibenseite des Zentrums und zweiten Fusspunkten angeordnet an der Felge an der Bremsscheibenseite. Durch diese erfindungsgemässe Anordnung der Speichen erfolgt eine bessere Krafteinleitung von der Speiche in die Felge. Ferner führt dies zu einer Verbesserung des Faserverlaufs, sodass die Stabilität der Speichen in den Fusspunkten gesteigert wird. Das Risiko, dass die Speichen an den Fusspunkten ausreissen, wird minimiert.

In einer weiteren bevorzugten Ausführungsform sind die ersten und zweiten Fusspunkte der ersten Speichengruppe und/oder die ersten und zweiten Fusspunkte der zweiten Speichengruppe beabstandet zu einem Scheitel S der Felge angeordnet. Der Abstand der ersten und zweiten Fusspunkte der ersten Speichengruppe zum Scheitel S der Felge ist grösser als der Abstand der ersten und zweiten Fusspunkte der zweiten Speichengruppe. Beim Scheitel S der Felge handelt es sich um jenen Bereich des Felgenkörpers, welcher dem Felgenbett gegenüberliegt. Beim Vorspannen der Speichen wird das Felgenbett zentral positioniert. Erfindungsgemäss ist die Felge vorzugsweise als symmetrischer Körper ausgebildet, besonders bevorzugt als symmetrischer Hohlkörper. Geht man von einer symmetrischen Felgengeometrie aus, liegt der tiefste Punkt des Felgenbetts und der Scheitel S in einer Ebene, der Symmetrieebene der Felge, welche gleichzeitig eine vertikale Symmetrieebene des Fahrradlaufrads bildet.

Der Scheitel S verläuft im Schnitt der Symmetrieebene des Fahrradlaufrads mit dem Felgenkörper und ist dem Zentrum des Fahrradlaufrades zugewandt. Um das Fahrgefühl des Fahrradlaufrades zu verbessern, ist es vorteilhaft, wenn die Speichenspannung im vorgespannten Zustand sowohl in den Speichen der ersten Speichengruppe auf der Bremsscheibenseite als auch in den Speichen der zweiten Speichengruppe auf der Nicht-Bremsscheibenseite annähernd gleich gross ist. Dies wird unter anderem durch die erfindungsgemässe Anordnung der Fusspunkte erzielt. Eine symmetrische Form der Felge verbessert darüber hinaus die Aerodynamik des Fahrradlaufrades per se.

In einer bevorzugten Ausführungsvariante weist das Zentrum zwei gegenüberliegende Zentrumsscheiben, eine auf der Bremsscheibenseite und eine auf der Nicht-Bremsscheibenseite auf, wobei die Zentrumsscheiben um einen Winkel gamma (γ) geneigt zu einer Achse w ausbildet sind, wobei der Winkel gamma (γ) einen Wert zwischen 6° bis 8° aufweist. Ein Vorteil, welcher aus der Neigung der Zentrumsscheiben resultiert, ist die Minimierung radialer interlaminarer Kräfte, welche beispielsweise beim Vorspannen der Speichen auftreten können.

In einer weiteren bevorzugten Ausführungsvariante bilden die ersten und die zweiten Speichenabschnitte der Speichen einzelne Kreuzungspunkte, wobei die Kreuzungspunkte durch einzelne unidirektionale Faserlagen der Speichenabschnitte gebildet werden. Durch die Anordnung in mehreren Lagen verdickt sich der Querschnitt im Kreuzungspunkt. Der Kreuzungspunkt der Speichenabschnitte wird erfindungsgemäss dadurch ausgebildet, dass die Lagen des ersten Speichenabschnitts abwechselnd mit den Lagen des weiteren ersten Speichenabschnitts laminiert sind, sodass am Kreuzungspunkt eine Verwebung entsteht. Durch diese Verwebung resultiert ein solides Speichenkreuz, wobei dieses Speichenkreuz die Systemsteifigkeit erhöht. Beispielsweise wird eine erste Lage des ersten Speichenabschnitts überlagert von einer erste Lage eines weiteren ersten Speichenabschnitts, wobei diese erste Lage dann von einer zweiten Lage des ersten Speichenabschnitts überlagert wird, gefolgt von einer zweiten Lage des zweiten Speichenabschnitts. In einer bevorzugten Ausführungsform ist der Kreuzungspunkt durch mindestens vier Lagen gebildet. Durch den erfindungsgemässen Aufbau des Kreuzungspunktes erfolgt ein Verweben, sodass zusätzliche stoffschlüssige Verbindungen der einzelnen Speichenabschnitte vermieden werden können.

In einer weiteren bevorzugten Ausführungsvariante nehmen die ersten und zweiten Speichenabschnitte der ersten Speichengruppe, im vorgespannten Zustand zur Aussen-geometrie der Felge, insbesondere des Felgenkörpers, einen Einführungswinkel β (beta) ein, welcher vorzugsweise zwischen 1 20° und 180° liegt und die ersten und zweiten Speichenabschnitte der zweiten Speichengruppe nehmen einen Einführungswinkel α(alpha) ein, welcher grösser 90° ist.

In einer weiteren bevorzugten Ausführungsform der Erfindung weist die Felge keinen symmetrischen, sondern einen asymmetrischen Felgenkörper auf. Der asymmetrische Felgenkörper weist dabei eine Querschnittsfläche bzw. einen Querschnitt auf, welche bezüglich der Symmetrieebene des Fahrradlaufrads asymmetrisch ausgebildet ist.

In einer Ausführungsform des Fahrradlaufrads mit asymmetrischen Felgenkörper, weist der asymmetrische Felgenkörper im Bereich der ersten und der zweiten Fusspunkte der Speichen der ersten Speichengruppe einen anderen Felgenquerschnitt auf, als im Bereich der ersten und zweiten Fusspunkte der Speichen der zweiten Speichengruppe. Bedingt durch die Variation des Querschnitts ist die Felge bezüglich der Drehachse des Fahrradlaufrads nicht rotationsymmetrisch, sprich rotationsasymmetrisch ausgebildet.

In einer weiteren Ausführungsform des Fahrradlaufrads mit asymmetrischen Felgenkörper, weist der asymmetrische Felgenkörper im Bereich der ersten und der zweiten Fusspunkte der Speichen der ersten Speichengruppe den gleichen Felgenquerschnitt auf, als im Bereich der ersten und zweiten Fusspunkte der Speichen der zweiten Speichengruppe. Anders als bei der vorgängig erläuterten Ausführungsform variiert der Querschnitt nicht und die Felge ist bezüglich der Drehachse des Fahrradlaufrads rotationsymmetrisch ausgebildet. In einer weiteren Ausführungsform des Fahrradlaufrads mit symmetrischem Felgenkörper, weist der symmetrische Felgenkörper im Bereich der ersten und der zweiten Fusspunkte der Speichen der ersten Speichengruppe den gleichen Felgenquerschnitt auf, wie im Bereich der ersten und zweiten Fusspunkte der Speichen der zweiten Speichengruppe. Die Felge ist bezüglich der Drehachse des Fahrradlaufrads daher rotationssymmetrisch ausgebildet.

In einer weiteren Ausführungsform des Fahrradlaufrads mit symmetrischen Felgenkörper ist die Felge bezüglich der Drehachse des Fahrradlaufrads nicht rotationssymmetrisch, sprich rotationsasymmetrisch ausgebildet.

In einer weiteren bevorzugten Ausführungsform, sind die Speichenwinkel "delta" und "epsilon" welche die Speichen zur Symmetrieebene des Fahrradlaufrads sowohl auf der Brems-, als auch auf der Nicht-Bremsscheibenseiten einnehmen, im Wesentlichen gleich gross. Es resultiert auf beiden Seiten eine annähernd gleiche Vorspannkraft der vorgespannten Speichen. Ferner wird die Krafteinleitung optimiert.

In einer bevorzugten Ausführungsform sind die Abmessungen der Speichenhöhe h kleiner als jene der Speichenbreite b. Die Speiche weist daher eine eher flache Geometrie auf. Bevorzugt, ist das Verhältnis von Speichenhöhe zu Speichenbreite kleiner als 0.5. Dies hat sich allgemein als vorteilhaft beim Vorspannen gerade laminierter, ausgehärteter Speichen erwiesen. Spannungsspitzen infolge einer Biegung der Speichen, welche beim Vorspannen eintreten, können so gering gehalten werden.

In einer weiteren Ausführungsform des erfindungsgemässen Fahrradlaufrads sind die Speichen als Druckspeichen ausgebildet.

Um die erfindungsgemäss vorteilhafte Krafteinleitung im Übergang der Speichen zu den Felgen, insbesondere dem Felgenscheitelbereich, zu erreichen, variiert daher die Geometrie bzw. der periphere Verlauf des Felgenscheitelbereichs, d.h. die Felgenscheitellinie entlang der inneren Felgen-Peripherie, wellenlinienartig mit bereichsweise flachverlaufenden Scheitelbereichen. Die beiden Felgenbasislinien verlaufen ihrerseits wie bei herkömmlichen Felgen kreisförmig (entlang der äusseren Peripherie der Felge). Felgenscheitelbereich und Felgenbasislinien sind räumlich über stetig verlaufende Raumflächen miteinander verbunden. In bevorzugten Ausführungsformen wird für die Aussenflächen der Felgen mindestens eine G1-Stetigkeit vorgesehen. In weiteren bevorzugten Ausführungsformen wird für die Aussenflächen der Felgen maximal eine G2-Stetigkeit vorgesehen.

In einer alternativen Ausführungsform können statt der flachverlaufenden (parallel zu den Felgenbasislinien) Scheitelbereiche diese auch in Laufrichtung des Rades schräg zu den Felgenbasislinien verlaufen, um den Luftwiderstand zu reduzieren. In einer Ausführungsform sind diese in einem spitzen Winkel in Richtung der Laufrichtung, wobei die abfallende Flanke des Scheitels gezielt steiler abfällt, ausgeführt.

In einer alternativen Ausführungsform können statt der flachverlaufenden (parallel zu den Felgenbasislinien) Scheitelbereiche diese auch gegen die Laufrichtung des Rades schräg zu den Felgenbasislinien verlaufen, um den Luftwiderstand zu reduzieren. In einer Ausführungsform sind diese in einem spitzen Winkel gegen die Laufrichtung, wobei die abfallende Flanke des Scheitels gezielt steiler abfällt, ausgeführt.

An den jeweiligen flachverlaufenden Scheitelbereichen können die Speichen so verbunden werden, dass die erwähnte optimale Krafteinleitung bei Belastung erzielt und dadurch die Belastung der laminierten Verbindungsbereiche möglichst minimal gehalten wird.

### KURZE ERLÄUTERUNG ZU DEN FIGUREN

Die Erfindung soll nachfolgend im Zusammenhang mit der Zeichnung anhand von Ausführungsbeispielen näher erläutert werden. Es zeigen:
- Fig. 1: eine schematische Darstellung des Querschnitts durch ein Fahrradlaufrad in einem laminierten Zustand (a), einem Zustand beim Vorspannen (b) und einem vorgespannten Zustand (c),
- Fig. 2: eine teilweise schematische Schnittdarstellung einer Hälfte des Felgenquerschnitts, ein erster und zweiter Speichenabschnitt, der ersten und zweiten Speichengruppe in einem vorgespannten Zustand,
- Fig. 3: zeigt die Ansicht aus Figur 2 mit den Einführungswinkeln α (alpha) und β (beta) der ersten Speichenabschnitte der ersten und zweiten Speichengruppe, im vorgespannten Zustand, in einer teilweisen schematischen Schnittdarstellung,
- Fig. 4: zeigt schematisch eine teilweise Schnittdarstellung durch die Felge, wobei die Integration der Speiche in der Felge gezeigt wird,
- Fig. 5: zeigt eine Schnittdarstellung durch einen Kreuzungspunkt von Speichenabschnitten,
- Fig. 6: zeigt eine perspektivische Ansicht des erfindungsgemässen Fahrradlaufrads,
- Fig. 7: zeigt eine Explosionsdarstellung eines Werkzeugs zur Herstellung des erfindungsgemässen Laufrads.
- Fig. 8: zeigt schematisch eine weitere Ausführungsform des erfindungsgemässen Fahrradlaufrads in einer vertikalen Schnittdarstellung, insbesondere die Führung der ersten und zweiten Speichenabschnitte,
- Fig. 9(a): zeigt die Ausführungsform aus Fig. 8 in einer detaillierteren Darstellung mit asymmetrischer Felge und Speichenverlauf auf der Bremsscheibenseite des Fahrradlaufrads,
- Fig. 9(b): zeigt die Ausführungsform aus Fig. 8 in einer detaillierteren Darstellung mit asymmetrischer Felge und Speichenverlauf auf der Nicht-Bremsscheibenseite des Fahrradlaufrads,
- Figur 10(a): zeigt einen teilweisen Ausschnitt aus der Fig. 9(a) umfassend einen Querschnitt durch die Felge und einen Speichenabschnitt im vorgespannten Zustand auf der Bremsscheibenseite,
- Fig. 10(b): zeigt einen teilweisen Ausschnitt aus der Fig. 9(b), umfassend einen Querschnitt durch die Felge und einen Speichenabschnitt im vorgespannten Zustand auf der Nicht-Bremsscheibenseite,
- Fig. 11: zeigt die Felgen aus Figur 10(a) und Figur 10(b) in einer perspektivischen Ansicht ohne Speichen,
- Fig. 11(b): zeigt eine erste Ausführungsform eines Felgenscheitelbereichs,
- Fig. 11(c): zeigt eine zweite Ausführungsform eines Felgenscheitelbereichs,
- Fig. 12: zeigt eine schematische Darstellung des Fahrradlaufrads in einer Ansicht von Oben mit einer möglichen Ausführungsform der Zentrumsscheiben, wie sie auf der Bremsscheibenseite als auch auf der Nicht-Bremsscheibenseite des Fahrradlaufrads zu finden sind.

### WEGE ZUR AUSFÜHRUNG DER ERFINDUNG

Ist im Folgenden vom laminierten Zustand des ersten und zweiten Speichenabschnitts die Rede, definiert dies einen initialen Zustand der Speichen. Für Fahrradlaufräder mit vorgespannten Speichen ist in diesem initialen Zustand der erste und zweite Speichenabschnitt ungespannt und noch nicht mit einer Speichenvorspannkraft beaufschlagt.

Ist im Folgenden für Fahrradlaufräder mit vorgespannten Speichen von einem vorgespannten Zustand des ersten und zweiten Speichenabschnitts die Rede, definiert dies einen finalen Zustand der Speichen, bei welchem die Speichen mit einer Speichenvorspannkraft beaufschlagt, d.h. vorgespannt sind. Die im Anschluss eingesetzte Nabe hält die Speichen im vorgespannten Zustand und daher im finalen Zustand.

In einer beispielhaften Ausführungsform ist die Speichenvorspannkraft, welche beim Vorspannen auf die ersten und zweiten Speichenabschnitte aufgebracht wird, auf der Nicht-Bremsscheibenseite annähernd gleich gross wie auf der Bremsscheibenseite des Fahrradlaufrads, vorzugsweise ist die Differenz zwischen den beiden Vorspannkräften weniger als 200 N.

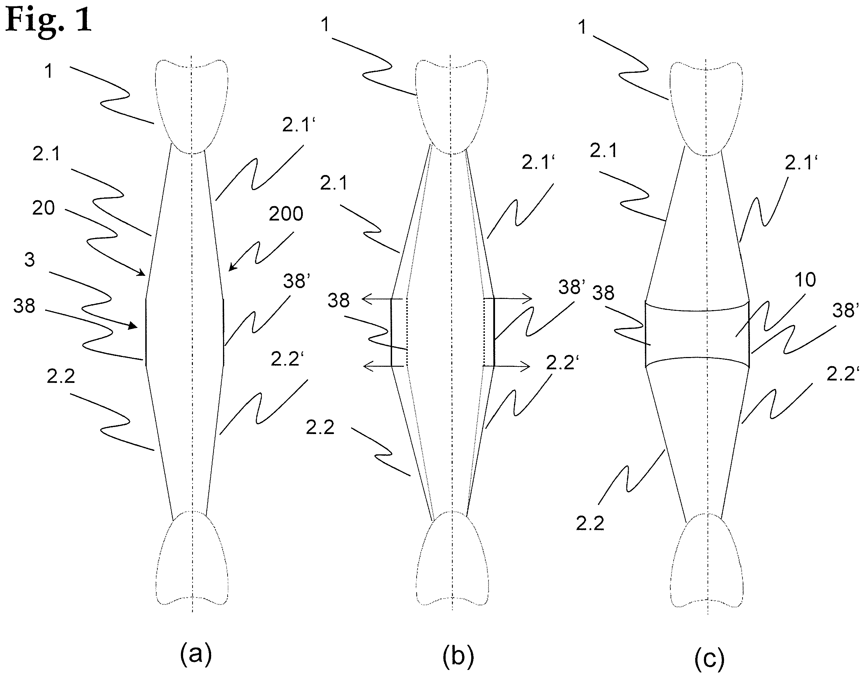

Figur 1 zeigt exemplarisch die drei Schritte (a) bis (c) beim Vorgang des Vorspannens eines Fahrradlaufrades mit vorgespannten Speichen. In einer bevorzugten Ausführungsform sind die Speichen aus einem UD (unidirektional) Gelege aus Carbon Faser mit einem Zug E-Modul von 130 GPa bis 215 GPa. Die Abbildung 1(a) zeigt einen Querschnitt durch das Fahrradlaufrad im laminierten Zustand. Die Felge 1, die Speichen 2 der ersten und zweiten Speichengruppe 20, 200 umfassend den ersten und zweiten Speichenabschnitt 2.1, 2.2; 2.1' und 2.2' und das Zentrum 3, aufweisend eine erste und zweite Zentrumsscheibe 38, 38' werden dabei in einem Schritt laminiert, wobei der erste und der zweite Speichenabschnitt 2.1, 2.2; 2.1' und 2.2' eine im Wesentlichen gerade Form aufweisen. Figur 1(b) zeigt den Vorgang des Vorspannens, das Zentrum 3, vorzugsweise bestehend aus zwei Zentrumsschreiben 38, 38', wird dabei in horizontaler Richtung, auf in etwa der Grösse der Nabe auseinander gezogen, wobei die Speichenabschnitte 2.1, 2.2, 2.1' und 2.2' vom laminierten Zustand in einen vorgespannten Zustand überführt werden. Im letzten Schritt, wie in Figur 1 (c) dargestellt, wird die Nabe 10 eingesetzt, welche die Speichen im vorgespannten Zustand hält. Um die Spannungsspitzen infolge der Biegung der Speichen, welche beim Vorspannen eintreten, so gering als möglich halten zu können, weisen die Speichen eine flache Geometrie auf. Das Verhältnis einer Speichenhöhe zu Speichenbreite ist klein, vorzugsweise kleiner als 0.5.

In einer bevorzugten Ausführungsform sind die Abmessungen der Speichenhöhe h kleiner als jene der Speichenbreite b. Die Speiche weist daher eine eher flache Geometrie auf. Bevorzugt, ist das Verhältnis von Speichenhöhe zu Speichenbreite kleiner als 0.5. Dies hat sich allgemein als vorteilhaft beim Vorspannen gerade laminierter, ausgehärteter Speichen erwiesen. Spannungsspitzen infolge einer Biegung der Speichen, welche beim Vorspannen eintreten, können so gering gehalten werden.

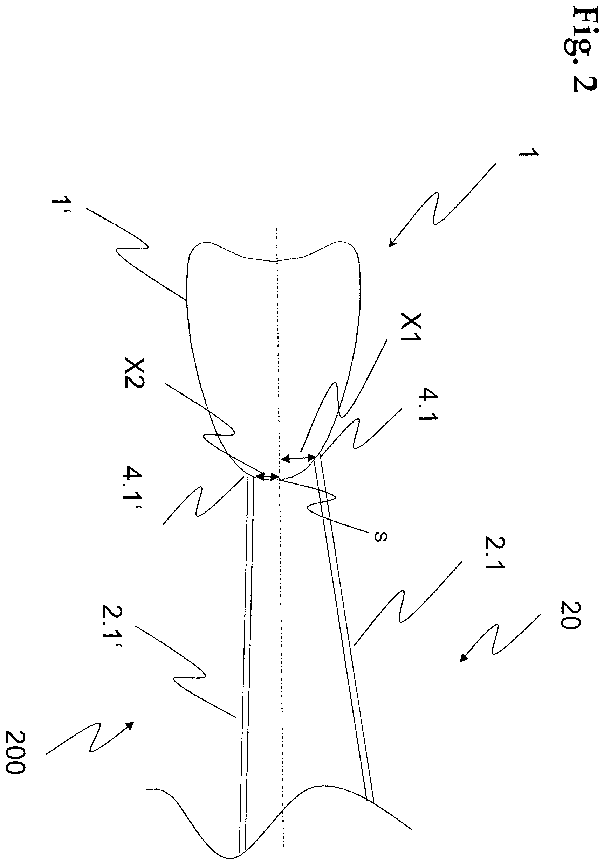

Figur 2 zeigt einen Querschnitt durch die Felge 1, und eine teilweise Darstellung eines ersten Speichenabschnitts 2.1 der ersten Speichengruppe 20 und des ersten Speichenabschnitts 2.1' des zweiten Speichengruppe 200. Die Speichen 2 der ersten Speichengruppe 20 verlaufen zwischen den ersten Fusspunkten 4.1, einer Bremsscheibenseite des Zentrums 3 und einem zweiten Fusspunkt 4.2 (in Figur 2 nicht dargestellt). Die Speichen der zweiten Speichengruppe 200 verlaufen zwischen einem ersten Fusspunkt 4.1', einer Nicht-Bremsscheibenseite des Zentrums 3 und einem zweiten Fusspunkt 4.2' (in Figur 2 nicht dargestellt). Die Fusspunkte sind am Felgenkörper 1' der Felge 1 angeordnet. In dieser Ausführungsform ist die Felge 1, insbesondere der Felgenkörper 1' als symmetrischer Körper ausgeführt. In der Ausführungsform gemäss Figur 2 ist der Abstand X1 den der Fusspunkt 4.1 von der Symmetrieebene der Felge 1 einnimmt, grösser als der Abstand X2 den der Fusspunkt 4.1' ebenfalls zur Symmetrieebene einnimmt. In einer bevorzugten Ausführungsform ist der Abstand X2 in etwa die Hälfte vom Abstand X1, bezogen auf die gezeigte Felgengeometrie.

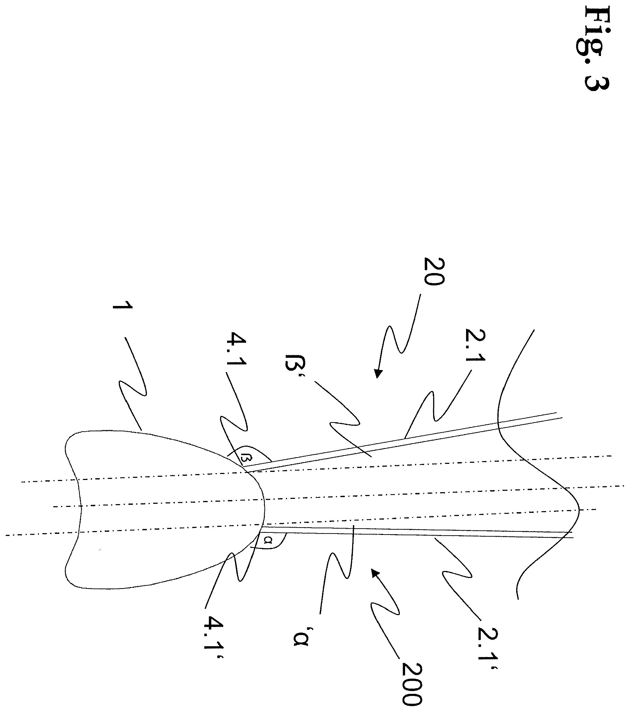

Figur 3 zeigt die Anordnung aus Figur 2 ergänzt um den Einführungswinkel β (beta) den der erste und zweite Speichenabschnitt 2.1, 2.2 der ersten Speichengruppe 20, im vorgespannten Zustand zur Aussengeometrie der Felge 1, gemessen im Fusspunkt 4.1 und 4.2 (nicht dargestellt) einnimmt. Des Weiteren ist der Einführungswinkel α (alpha) gezeigt, welchen der erste und zweite Speichenabschnitt 2.1', 2.2' der zweiten Speichengruppe 200 im vorgespannten Zustand, zur Aussengeometrie der Felge 1, gemessen im ersten und zweiten Fusspunkt 4.1', 4.2' einnimmt. In der in Figur 3 dargestellten, bevorzugten Ausführungsform ist der Einführungswinkel β (beta), bezogen auf die gezeigten Felgengeometrie zwischen 120° und 180°. Der Einführungswinkel α (alpha) weist einen Wert von grösser 90° auf.

In der Figur 3 des Weiteren dargestellt ist ein Winkel β' (beta-strich) und ein Winkel α' (alpha-strich). Der Winkel α' (alpha-strich) wird gemessen zwischen einer parallelen Ebene zur Symmetrieebene der Felge 1, welche durch den Fusspunkt 4.1' verläuft und dem ersten Speichenabschnitt 2.1', im vorgespannten Zustand auf der Nicht-Bremsscheibenseite 31. Der Winkel β' (beta-strich) wird gemessen zwischen einer parallelen Ebene zur Symmetrieebene der Felge 1, welche durch den Fusspunkt 4.1 verläuft und dem ersten Speichenabschnitt 2.1, im vorgespannten Zustand auf der Bremsscheibenseite. Der Winkel α' (alpha-strich) und β' (beta-strich) unterscheiden sich um einem Wert kleiner oder gleich 2°, wobei α' (alpha-strich) vorzugsweise grösser β' (beta-strich) ist. Diese Beziehung zwischen α' (alpha-strich) und β' (beta-strich) ist unabhängig von der gewählten Geometrie der Felge 1.

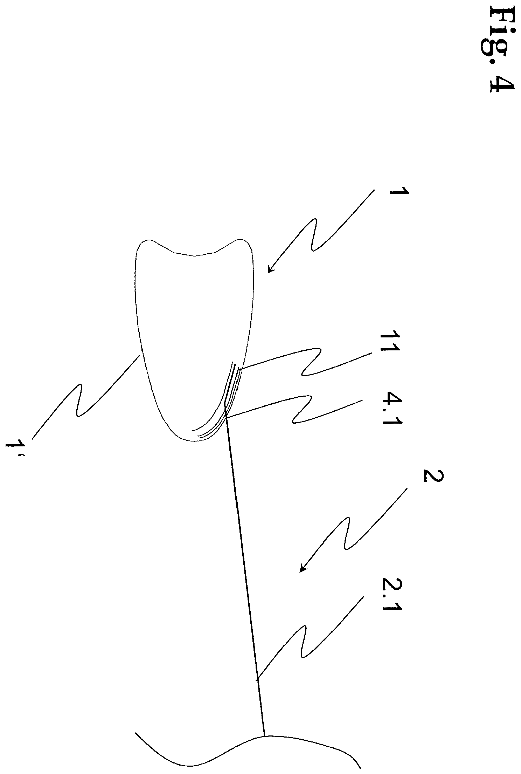

Figur 4 zeigt eine teilweise Darstellung eines Querschnitts durch die Felge 1, in jenem Bereich in dem die Speiche 2, bzw. der Speichenabschnitt 2.1 integriert ist. Die Felge 1, die Speichen 2 und das Zentrum 3 werden bei der Herstellung des Fahrradlaufrads in einem Schritt in einer Aluminiumform oder Stahlform verlegt. In einer bevorzugten Ausführungsform ist die Speiche 2 aus einem unidirektionalen Gelege aus Carbon Faser und die Felge 1 aus einem Gewebe, vorzugsweise ebenfalls aus Carbon Fasern gefertigt.

In einer weiteren bevorzugten Ausführungsform werden die Speichen 2 und die Felge 1 aus einem Gelege, die Speichen aus einem unidirektionalen und die Felge aus einem multidirektionalen Gelege gefertigt.

Die Speiche 2 ist in mehreren Schichten aus dem unidirektionalen Gelege aufbaut. Ihre Fasern verlaufen dabei durchgängig von einem ersten Fusspunkt über das Zentrum 3 des Fahrradlaufrads zu einem zweiten Fusspunkt angeordnet am Felgenkörper (in Figur 4 nicht dargestellt). Bei der Integration der Speiche 2 im Felgenkörper 1' wird das unidirektionale Gelege der Speiche 2 durch mindestens eine, vorzugsweise mehrere Lagen des Gewebes 11, aus welchem die Felge 1 gefertigt ist, auf einer Innenseite des Felgenkörpers 1' befestigt. Die Anzahl der Lagen 11 sowie deren Orientierung können dabei variieren. Ein zusätzliches Verkleben der Speiche 2, beispielsweise am Fusspunkt 4.1, ist nicht erforderlich.

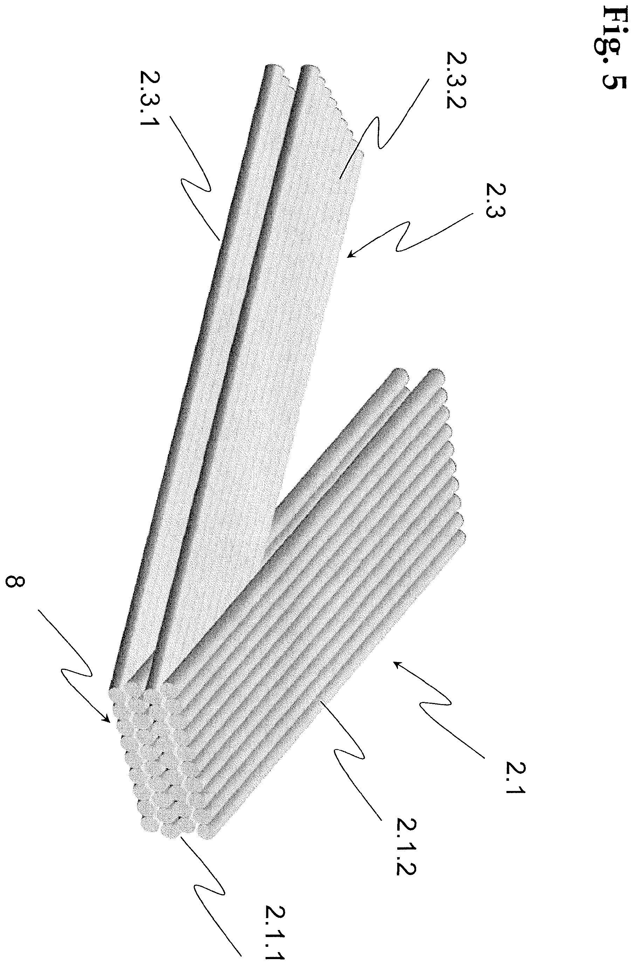

Figur 5 zeigt einen Schnitt durch den Kreuzungspunkt 8, welcher beispielsweise durch zwei erste Speichenabschnitte 2.1, 2.3 verläuft. Da die ersten Speichenabschnitte zu den zweiten Speichenabschnitten symmetrisch sind und eine Speiche 2 bilden, weisen auch die zweiten Speichenabschnitte Kreuzungspunkte 8 auf (in Figur 5 nicht dargestellt). Wie in Figur 5 exemplarisch dargestellt, ist der erste Speichenabschnitt 2.1 und der weitere erste Speichenabschnitt 2.3 aus mehreren Lagen eines unidirektionalen Geleges aufgebaut. Vorzugsweise umfasst der Kreuzungspunkt vier Lagen 2.3.1, 2.3.2, 2.1.1, 2.1.2. In der bevorzugten Ausführungsform gemäss der Figur 5 werden die Lagen 2.1.1 und 2.1.2 der ersten Speichenabschnitte 2.1 abwechselnd mit den Lagen 2.3.1 und 2.3.2 des weiteren ersten Speichenabschnitts 2.3 laminiert, sodass am Kreuzungspunkt 8 eine Verwebung entsteht. In Figur 5 nicht direkt erkennbar ist, dass es am Kreuzungspunkt 8, bedingt durch die mindestens vier Lagen zu einer Verdickung des Speichenquerschnittes kommt.

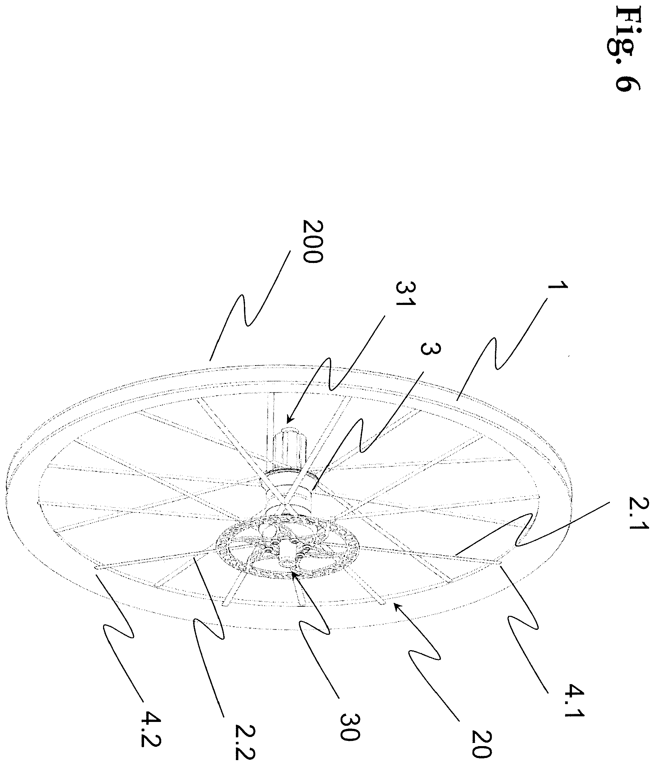

Figur 6 zeigt eine perspektivische Ansicht des erfindungsgemässen Fahrradlaufrads. Gezeigt werden die Speichen der ersten 20, der zweiten Speichengruppe 200 sowie die Nicht-Bremsscheibenseite 31 und die Bremsscheibenseite 30 des erfindungsgemässen Fahrradlaufrads und die Felge 1. Exemplarisch mit Bezugszeichen versehen ist eine Speiche umfassend einen ersten und einen zweiten Speichenabschnitt 2.1, 2.2, wobei diese Speiche durchgängig zwischen den Fusspunkten 4.1 und 4.2, welche an der Felge 1 angeordnet sind verläuft und eine Speiche der ersten Speichengruppe 20 bildet.

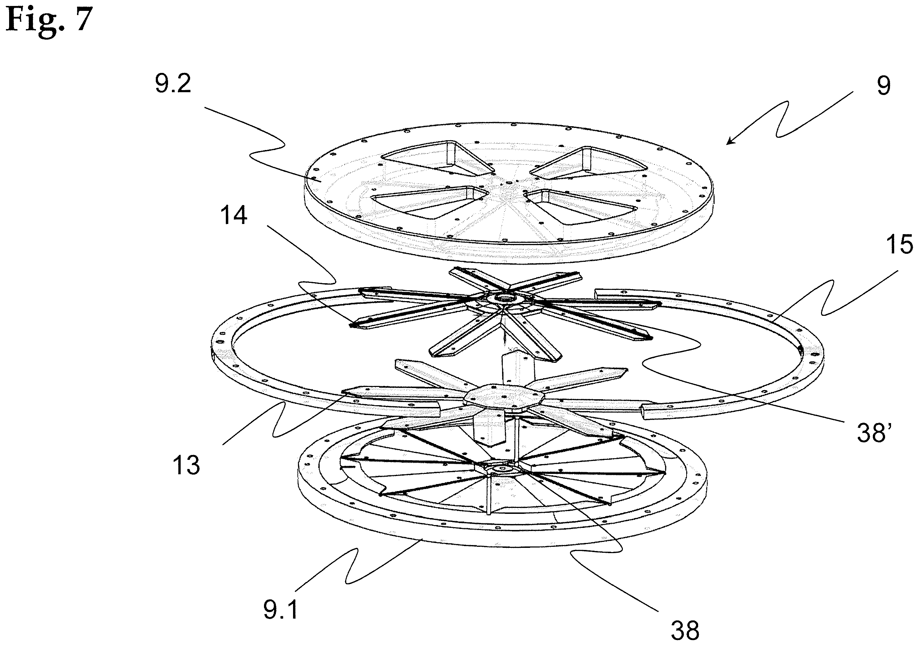

Figur 7 zeigt eine bevorzugte Ausführungsform einer erfindungsgemässen Negativform 9. Die Negativform 9 umfasst einen ersten Teil 9.1 und einen zweiten Teil 9.2. In diese beiden Teile werden, in den dazugehörigen Ausnehmungen, die Fasern für den Felgenkörper, die Speichen, das Zentrum aufweisend eine erste und zweite Zentrumsscheibe 38, 38' in einem Schritt verlegt. Eine weitere Form 15 bildet die Geometrie des Felgenbetts. Des Weiteren gezeigt werden zwei Stempelformen 14 und 13. Im zusammengesetzten Zustand der Negativform 9 wirken die Stempelformen 13 und 14 formschlüssig mit Ausnehmungen für die Speichen zusammen. Auf diese Weise wird ein gewünschter Speichenquerschnitt ausgebildet.

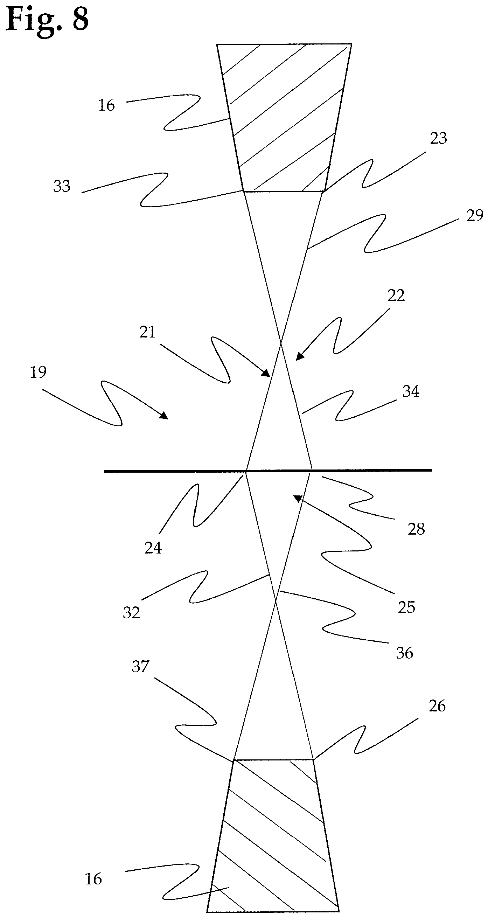

Figur 8 zeigt schematisch eine weitere Ausführungsform des erfindungsgemässen Fahrradlaufrads in einer vertikalen Schnittdarstellung. Die stark vereinfacht dargestellte Felge 16 kann einen symmetrischen oder einen asymmetrischen Felgenkörper aufweisen. In der in Figur 8 gezeigten, bevorzugten Ausführungsform bilden die Speichen 19 eine erste und eine zweite Speichengruppe 21, 22. Die Speichen 19 der ersten und zweiten Speichengruppe 21, 22 weisen erste und zweite Speichenabschnitte 29, 32, 34, 36 auf. Wie in Figur 8 gezeigt, verlaufen die ersten Speichenabschnitte 29 der ersten Speichengruppe 21 zwischen ersten Fusspunkten 23 angeordnet an der Felge 16 an einer Nicht-Bremsschreibenseite 28 sowie einer Bremsscheibenseite 24 des Zentrums 25 und die zweiten Speichenabschnitte 32 zwischen der Bremsscheibenseite 24 des Zentrums 25 und zweiten Fusspunkten 26 angeordnet an der Felge 16 an der Nicht-Bremsscheibenseite. Die ersten Speichenabschnitte 34 der Speichen 19 der zweiten Speichengruppe 22 verlaufen zwischen ersten Fusspunkten 33 angeordnet an der Felge 16 an der Bremsscheibenseite und der Nicht-Bremsscheibenseite 28 des Zentrums 25. Die zweiten Speichenabschnitte 36 verlaufen zwischen der Nicht-Bremsscheibenseite 28 des Zentrums und zweiten Fusspunkten 37 angeordnet an der Felge an der Bremsscheibenseite. In der in Figur 8 dargestellten Ausführungsform verlaufen die Speichenabschnitte gerade. Die Speichen sind vorgespannt. Das Zentrum 25 weist zwei gegenüberliegende Zentrumscheiben, eine auf der Bremsscheibenseite 24 und eine auf der Nicht-Bremsscheibenseite 28, auf (in Figur 8 nicht gezeigt).

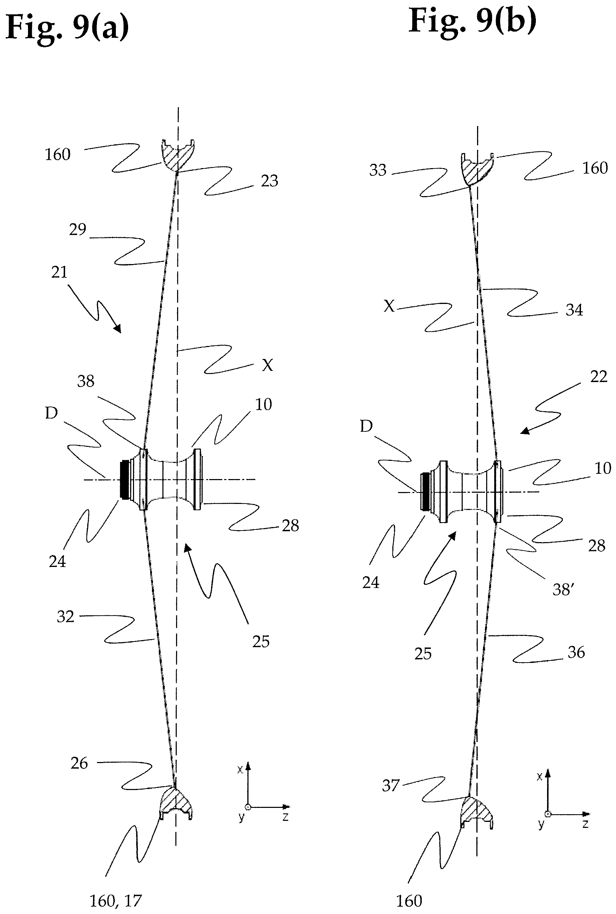

In Figur 9(a) ist die schematische Darstellung aus Fig. 8 am Beispiel einer Felge 160 aufweisend einen asymmetrischen Felgenkörper, welcher nicht symmetrisch bezüglich einer vertikalen Symmetrieebene X ist, näher ausgeführt. Gezeigt wird ein Querschnitt. Am Beispiel einer Speiche aufweisend einen ersten und einen zweiten Speichenabschnitt 29, 32 wird der Verlauf der Speichen der ersten Speichengruppe 21 aufgezeigt. Die Ebene X stellt die vertikale Symmetrieebene und die horizontale Achse D die Drehachse des Fahrradlaufrads dar. In der gezeigten Ausführungsform sind die ersten und zweiten Speichenabschnitte 29, 32 im vorgespannten Zustand gezeigt. Im Zentrum 25 ist die Nabe 10 eingesetzt. Das Zentrum 25 wird durch zwei gegenüberliegende Zentrumsscheiben 38, 38' gebildet. Die Nabe 10 dient dazu, die Speichen im vorgespannten, finalen Zustand zu halten. Das Fahrradlaufrad weist eine Bremsscheibenseite 24 und eine Nicht-Bremsscheibenseite 28 auf. Der erste Speichenabschnitt 29 verläuft zwischen dem ersten Fusspunkt 23, jenem Punkt in welchen der Speichenabschnitt 29 in die Felge 160 eingebunden ist und der Zentrumsscheibe 38 auf der Bremsscheibenseite 24. Der Fusspunkt 23 ist zur Nicht-Bremsschreibenseite 28 hin orientiert. Der zweite Speichenabschnitt 32 verläuft zwischen der Zentrumsscheibe 38 auf der Bremsscheibenseite 24 und dem zweiten Fusspunkt 26, welcher zu Nicht-Bremsscheibenseite 28 hin orientiert ist. An diesem Fusspunkt 26 ist der zweite Speichenabschnitt in die Felge 160 eingebunden.

In Figur 9(b) ist die schematische Darstellung aus Fig. 8 am Beispiel einer Felge 160 aufweisend einen asymmetrischen Felgenkörper, welcher nicht symmetrisch bezüglich einer vertikalen Symmetrieebene X ist, näher ausgeführt. Am Beispiel einer Speiche aufweisend einen ersten und einen zweiten Speichenabschnitt 34, 36 wird der Verlauf der Speichen der zweiten Speichengruppe 22 aufgezeigt. Die Ebene X stellt die vertikale Symmetrieebene und die horizontale Achse D die Drehachse des Fahrradlaufrads dar. In der gezeigten Ausführungsform sind die ersten und zweiten Speichenabschnitte 34, 36 im vorgespannten Zustand gezeigt. Im Zentrum 25 ist die Nabe 10 eingesetzt. Das Zentrum 25 wird durch zwei gegenüberliegende Zentrumsscheiben 38, 38' gebildet. Die Nabe 10 dient dazu, die Speichen im vorgespannten, finalen Zustand zu halten. Das Fahrradlaufrad weist eine Bremsscheibenseite 24 und eine Nicht-Bremsscheibenseite 28 auf. Der erste Speichenabschnitt 34 verläuft zwischen dem ersten Fusspunkt 33, jenem Punkt in welchen der Speichenabschnitt 34 in die Felge 160 eingebunden ist und dem Zentrum 25 ausgebildet als Zentrumsscheibe 38' auf der Nicht-Bremsscheibenseite 28. Der Fusspunkt 33 ist zur Bremsschreibenseite 24 hin orientiert. Der zweite Speichenabschnitt 36 verläuft zwischen der Zentrumsscheibe 38' auf der Nicht-Bremsscheibenseite 28 und dem zweiten Fusspunkt 37, welcher zur Bremsscheibenseite 24 hin orientiert ist. An diesem Fusspunkt 37 ist der zweite Speichenabschnitt 36 in die Felge 160 eingebunden.

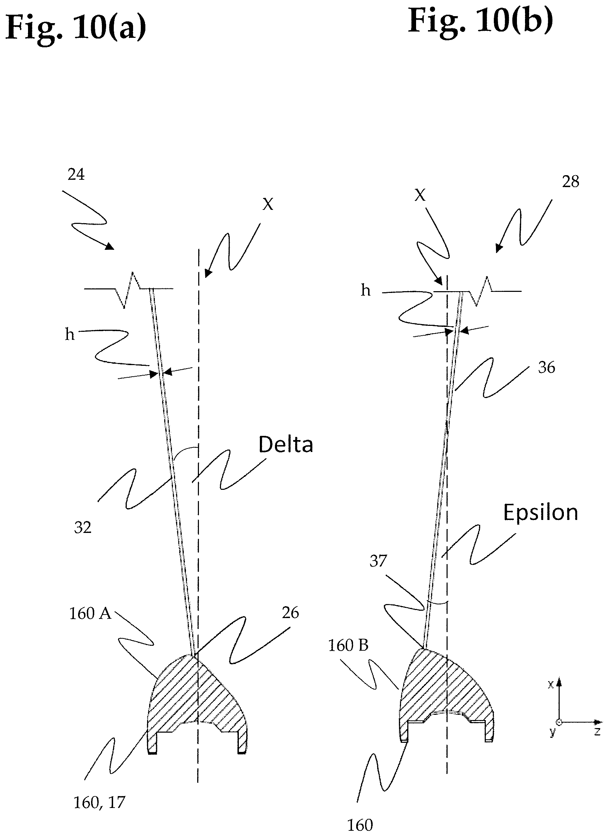

Fig. 10(a) zeigt in einer Querschnittsdarstellung einen Ausschnitt aus der Fig. 9(a) mit der Felge 160 aufweisend einen asymmetrischen Felgenkörper. X ist die Symmetrieebene des Fahrradlaufrads. Dargestellt ist ein Teil des zweiten Speichenabschnitts 32, welcher an der Bremsscheibenseite 24 verläuft und im zweiten Fusspunkt 26 mit der Felge 160 verbunden ist. Ebenfalls in Fig. 10(a) gezeigt ist ein Speichenwinkel Delta welchen die Speichen der ersten Speichengruppe zur Symmetrieebene des Fahrradlaufrads, im vorgespannten Zustand, einnehmen. Stellvertretend für die Speichen der ersten Speichengruppe ist der zweite Speichenabschnitt 32 im vorgespannten Zustand dargestellt.

Fig. 10(b) zeigt in einer Querschnittsdarstellung einen Ausschnitt aus der Fig. 9(b) mit der Felge 160 aufweisend einen asymmetrischen Felgenkörper. X ist die Symmetrieebene des Fahrradlaufrads. Dargestellt ist ein Teil des zweiten Speichenabschnitts 36, welcher an der Nicht-Bremsscheibenseite 28 verläuft und im zweiten Fusspunkt 37 mit der Felge 160 verbunden ist. Ebenfalls in Fig. 10(b) gezeigt ist ein Speichenwinkel Epsilon welchen die Speichen der zweiten Speichengruppe zur Symmetrieebene des Fahrradlaufrads im vorgespannten Zustand einnehmen. Stellvertretend für die Speichen der ersten Speichengruppe ist der zweite Speichenabschnitt 36 im vorgespannten Zustand dargestellt.

Exemplarisch in der Ausführungsform gemäss Figur 10(a) und Figur 10(b) dargestellt ist, die Speichenhöhe h. Eine Speichenbreite b ist in der Ansicht der Figur 10(a), 10(b) nicht sichtbar. In einer bevorzugten Ausführungsform sind die Abmessungen der Speichenhöhe h kleiner als jene der Speichenbreite b. Die Speiche weist daher eine eher flache Geometrie auf. Bevorzugt, ist das Verhältnis von Speichenhöhe zu Speichenbreite kleiner als 0.5. Diese Speichengeometrie ist nicht auf die gezeigte Ausführungsform des Fahrradlaufrads beschränkt. Sie hat sich allgemein als vorteilhaft beim Vorspannen gerade laminierter, ausgehärteter Speichen erwiesen. Spannungsspitzen infolge einer Biegung der Speichen, welche beim Vorspannen eintritt, können gering gehalten werden.

Die Fusspunkte 26 und 27 sind insbesondere im Übergang der Speichen in die Felge ausgerundet ausgestaltet.

Aus der Gegenüberstellung der beiden Felgenquerschnitte 160A und 160B ist ersichtlich, dass der Felgenquerschnitt im Bereich jener Fusspunkte 26, aus welchen die ersten Speichenabschnitte 32 der ersten Speichengruppe 21 austreten, einen anderen Querschnitt aufweist, als der Felgenquerschnitt im Bereich der Fusspunkte 37, aus welchen die ersten Speichenabschnitte 32 der zweiten Speichengruppe 22 austreten. Die Speichenwinkel Delta und Epsilon sind annähernd gleich gross, sodass auf der Bremsscheibenseite sowie auf der Nicht-Bremsscheibenseite eine annähernd gleiche Vorspannkraft vorliegt.

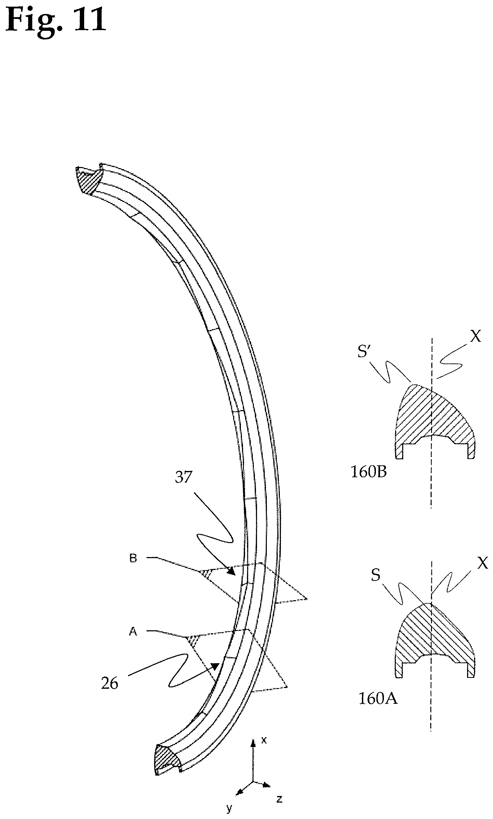

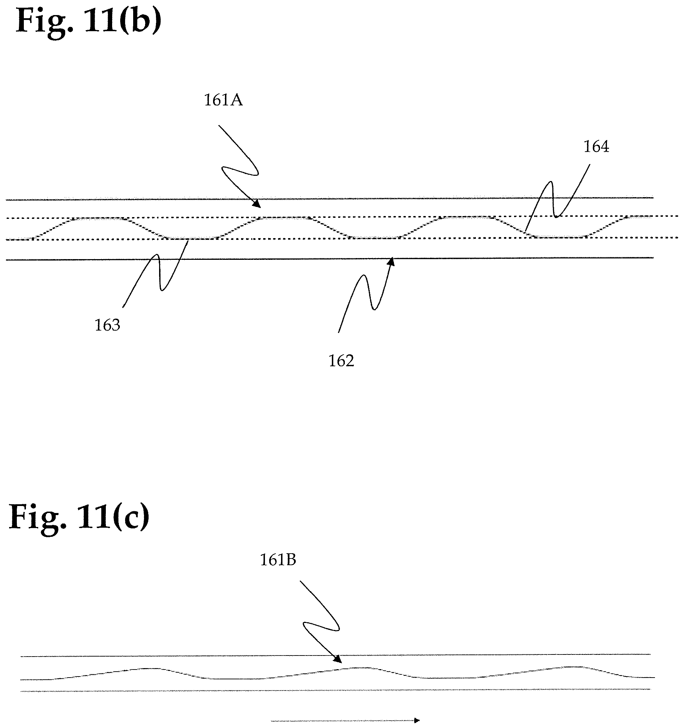

Fig. 11 zeigt eine teilweise Darstellung der Felge 160 aus Fig. 10(a), Fig.10(b) in einer perspektivischen Ansicht. Ferner ist zumindest teilweise aus der Fig. 11 ersichtlich, dass die Felge 160 nicht rotationsymmetrisch, sprich rotationsasymmetrisch, bezüglich der Drehachse D ausgestaltet ist. Die Asymmetrie wird durch eine Variation des Felgenquerschnitts erzielt. Zur besseren Verdeutlichung wurden in den Bereichen der Fusspunkte 26 und der Fusspunkte 37 zwei Schnittflächen A und B gelegt um auf diese Weise die unterschiedlichen Querschnitte 160A und 160B sichtbar zu machen. Beide Querschnitte stellen einen asymmetrischen Felgenkörper dar, das heisst beide Felgenkörper sind asymmetrisch bezüglich der Symmetrieebene X des Fahrradlaufrads. Die Rotationsasymmetrie der Felge bezüglich der Drehachse D wird durch eine Verschiebung des Scheitels S zum Scheitel S' in Richtung der Z-Achse erzielt. Wie insbesondere in der Ausführungsform gemäss Fig. 11 ersichtlich, nimmt der Felgenscheitelbereich 161 keinen runden, sondern seinen wellenlinienartigen Verlauf mit flach- oder schrägverlaufenden Scheiteln an.

Figur 11(b) zeigt eine mögliche Abwicklung eines Felgenscheitelbereichs 161A umfassend flach- und schrägverlaufende Scheitel 163, 164 bezüglich der beiden Felgenbasislinien 162, welche wie bei herkömmlichen Felgen kreisförmig verlaufen (entlang der äusseren Peripherie der Felge).

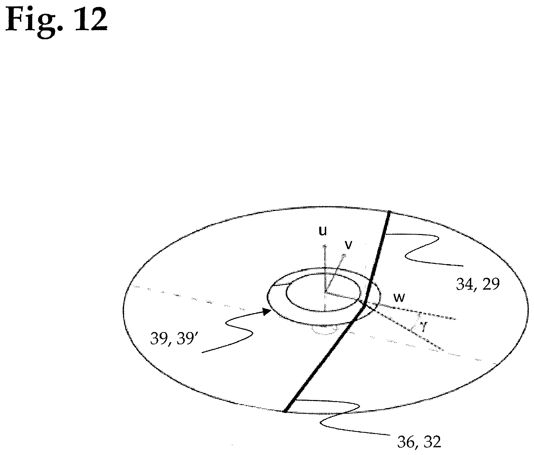

Bei den flachverlaufenden Scheiteln 163 handelt es sich um Scheitel die parallel zu den Felgenbasislinien 162 verlaufen. Bei den schrägverlaufenden Scheiteln 164 handelt es sich um jene Scheitel, die in Laufrichtung des Fahrradlaufrads gesehen, bestimmte Winkel zur Felgenbasislinie 162 einnehmen, sprich schräg zu diesen verlaufen. Figur 11 (c) zeigt eine alternative Ausführungsform einer Abwicklung eines Felgenscheitelbereichs 161B. Der gezeigte Pfeil deutet die Fahrtrichtung des Fahrradlaufrads an. Gemäss dieser Ausführungsform können statt der flachverlaufenden (parallel zu den Felgenbasislinien) Scheitelbereiche diese auch in Laufrichtung des Rades schräg zu den Felgenbasislinien verlaufen, beispielsweise in einem spitzen Winkel in Richtung der Laufrichtung, wobei die abfallende Flanke des Scheitels gezielt steiler abfällt. Fig. 12 zeigt eine schematische Darstellung des Fahrradlaufrads in einer Ansicht von oben, wobei anhand dieser Darstellung eine mögliche Ausführungsform der Zentrumsscheibe 39, 39' erläutert werden soll. Wie schematisch gezeigt, sind die Speichenabschnitte 34, 36, 29, 32 mit der Zentrumsscheibe 39, 39' verbunden, wobei die Zentrumsscheibe geneigt, in einem Winkel gamma (γ) zu einer Achse w ausgebildet ist. Bevorzugt beträgt dieser Neigungswinkel zwischen 6 und 8°. Zentrumsscheibe und Felge liegen nicht in der gleichen Ebene.

### BEZUGSZEICHENLISTE

- 1: Felge
- 1': symmetrischen Felgenkörper
- 1": ein Felgenbett
- 2: Speiche(n)
- 2': Speiche(n) (Vergleichsspeiche nach dem Stand derTechnik)
- 2": Speichenverlauf im vorgespannten Zustand
- 30: Bremsscheibenseite
- 20: erste Speichengruppe (Bremsscheibenseite)
- 2.1, 2.3: erster Speichenabschnitt (Bremsscheibenseite)
- 2.2: zweiter Speichenabschnitt (Bremsscheibenseite)
- 4.1: erste Fusspunkt(e) (Bremsscheibenseite)
- 4.2: zweite Fusspunkt(e) (Bremsscheibenseite)
- ß: Einführungswinkel (Bremsscheibenseite)
- ß': Winkel (Bremsscheibenseite)
- 31: Nicht-Bremsscheibenseite
- 200: zweite Speichengruppe (Nicht-Bremsscheibenseite)
- 2.1': erster Speichenabschnitt (Nicht-Bremsscheibenseite)
- 2.2': zweiter Speichenabschnitt (Nicht-Bremsscheibenseite)
- 4.1': Fusspunkt (e) (Nicht-Bremsscheibenseite)
- 4.2': Fusspunkt (e) (Nicht-Bremsscheibenseite)
- α: Einführungswinkel (Nicht-Bremsscheibenseite)
- α': Winkel (Nicht-Bremsscheibenseite)

- 10: Nabe
- 3: einem Zentrum
- 8: Kreuzungspunkt
- 2.3.1, 2.3.2, 2.1.1, 2.1.2: Gewebelagen

- 9: Negativform
- 9.1: Erster Teil Negativform
- 9.2: Zweiter Teil Negativform
- 15: Form
- 13, 14: Stempelformen
- 16, 160: Felge
- 17, 170: Felgenkörper
- 18: Felgenbett
- 21: erste Speichengruppe
- 19: Speichen
- 22: zweite Speichengruppe
- 29: erste Speichenabschnitte (erste Speichengruppe)
- 32: zweite Speichenabschnitte 32 (erste Speichengruppe)
- 23: erste Fusspunkte (erste Speichengruppe)
- 26: zweite Fusspunkte (zweite Speichengruppe)
- 28: Nicht-Bremsscheibenseite
- 24: Bremsscheibenseite
- 25: Zentrum
- 34: Erste Speichenabschnitte (zweite Speichengruppe)
- 36: Zweiten Speichenabschnitte (zweite Speichengruppe)
- 33: Erste Fusspunkte (zweite Speichengruppe)
- 37: Zweite Fusspunkte (zweite Speichengruppe)
- X: Vertikale Symmetrieebene des Fahrradlaufrads
- D: Drehachse
- 38, 38': Zentrumscheiben
- 39, 39': Speicheneinlaufbereich
- 160 A, 160 B: Felgenquerschnitt
- h: Speichenhöhe

## Patentansprüche

1. Verfahren zur Herstellung eines Fahrradlaufrads aus einem Faserverbundwerkstoff, wobei das Laminieren einer Felge (1, 16, 160), von Speichen (2), aufweisend je einen ersten und einen zweiten Speichenabschnitt (2.1, 2.1', 2.3, 29, 34; 2.2, 2.2', 32, 36) und eines Zentrums (3, 25), aufweisend eine erste und zweite Zentrumsscheibe (38, 38'), einstückig in einem Schritt erfolgt, in dem alle Fasern für Felge (1, 16, 160), Speichen (2) und Zentrum (3, 25) in einem Prozessschritt in dafür vorgesehenen Formteilen (9, 9.1, 9.2) ausgelegt werden, im Anschluss ein Aushärten erfolgt und nach dem Aushärten das Fahrradlaufrad umfassend Felge (1, 16, 160), Speichen (2) und Zentrum (3, 25) einstückig aus den Formteilen (9, 9.1, 9.2) entnommen wird, wobei die Speichen (2) derart laminiert und ausgehärtet werden, dass der erste und der zweite Speichenabschnitt (2.1, 2.1', 2.3, 29, 34; 2.2, 2.2', 32, 36) eine im Wesentlichen gerade Form aufweisen.

2. Verfahren nach Anspruch 1, **dadurch gekennzeichnet, dass** in einem zweiten Schritt ein Vorspannen der Speichen (2) und das Einsetzen einer Nabe (10) ausgeführtwerden.

3. Verfahren nach Anspruch 2, **dadurch gekennzeichnet, dass** das Vorspannen der Speichen (2) erfolgt, indem die beiden Zentrumsscheiben (38, 38') in horizontaler Richtung annähernd auf die Grösse der nachfolgend eingesetzten Nabe (10) auseinander gezogen werden, bevor die Nabe (10) eingesetzt wird.

4. Verfahren nach Anspruch 1, **dadurch gekennzeichnet, dass** in einem zweiten Schritt das Einsetzen der Nabe (10) erfolgt, ohne dass die Speichen (2) dabei vorgespannt werden.

5. Verfahren nach einem der vorangegangenen Ansprüche, **dadurch gekennzeichnet, dass** die Speichen (2) durchgängig derart laminiert werden, so dass der Faserverlauf des ersten und zweiten Speichenabschnitts (2.1, 2.1', 2.3, 29, 34; 2.2, 2.2', 32, 36) durchgängig zwischen an der Felge (1, 16, 160) angeordneten Fusspunkten (4.1, 4.1', 23, 33; 4.2, 4.2', 26, 37) verläuft.

6. Verfahren nach einem der vorangegangenen Ansprüche, **dadurch gekennzeichnet, dass** die Speichen (2) aus einem unidirektionalen Gelege deckschichtsfrei laminiert werden.

7. Fahrradlaufrad hergestellt durch ein Verfahren nach einem der Ansprüche 1-6, **dadurch gekennzeichnet, dass** die Speichen (2) eine erste und eine zweite Speichengruppe (20, 200) bilden, wobei die ersten Speichenabschnitte (2.1') der Speichen (2) der zweiten Speichengruppe (200) zwischen ersten Fusspunkten (4.1', 4.2') angeordnet an der Felge (1) an einer Nicht-Bremsschreibenseite und der Nicht-Bremsscheibenseite (31) des Zentrums (3) verlaufen und die zweiten Speichenabschnitte (2.2) zwischen der Nicht-Bremsscheibenseite (31) des Zentrums (3) und zweiten Fusspunkten (4.1', 4.2') angeordnet an der Felge (1) an der Nicht-Bremsscheibenseite und die ersten Speichenabschnitte (2.1, 2.1') der Speichen (2) der ersten Speichengruppe (20) zwischen ersten Fusspunkten (4.1, 4.2) angeordnet an der Felge (1) an der Bremsscheibenseite und der Bremsscheibenseite (30) des Zentrums (3) verlaufen und die zweiten Speichenabschnitte (2.2) zwischen der Bremsscheibenseite (30) des Zentrums und zweiten Fusspunkten (4.2) angeordnet an der Felge (1) an der Bremsscheibenseite.

8. Fahrradlaufrad hergestellt durch ein Verfahren nach einem der Ansprüche 1-6 **dadurch gekennzeichnet, dass** die Speichen (19) eine erste und eine zweite Speichengruppe (21, 22) bilden, wobei die ersten Speichenabschnitte (29) der Speichen (19) der ersten Speichengruppe (21) zwischen ersten Fusspunkten (23) angeordnet an der Felge (16) an einer Nicht-Bremsschreibenseite (28) und einer Bremsscheibenseite (24) des Zentrums (25) verlaufen und die zweiten Speichenabschnitte (32) zwischen der Bremsscheibenseite (24) des Zentrums (25) und zweiten Fusspunkten (26) angeordnet an der Felge (16) an der Nicht-Bremsscheibenseite und die ersten Speichenabschnitte (34) der Speichen (19) der zweiten Speichengruppe (22) zwischen ersten Fuss-punkten (33) angeordnet an der Felge (16) an der Bremsscheibenseite und der Nicht-Bremsscheibenseite (28) des Zentrums (25) verlaufen und die zweiten Speichenabschnitte (36) zwischen der Nicht-Bremsscheibenseite (28) des Zentrums und zweiten Fusspunkten (37) angeordnet an der Felge an der Bremsscheibenseite.

9. Fahrradlaufrad nach Anspruch 7 oder 8, **dadurch gekennzeichnet, dass** die ersten und zweiten Fusspunkte (4.1, 4.2, 32, 29) der ersten Speichengruppe (20, 21) und/oder die ersten und zweiten Fusspunkte (4.1', 4.2', 34, 36) der zweiten Speichengruppe (200,22) beabstandet zu einem Scheitel (S) der Felge (1, 160) angeordnet sind.

10. Fahrradlaufrad nach einem der vorangegangenen Ansprüche 7 - 9, **dadurch gekennzeichnet, dass** die Felge (1, 16) bezüglich einer Drehachse (D) des Fahrradlaufrads nicht-rotationssymmetrisch ausgestalten ist.

11. Fahrradlaufrad nach Anspruch 10, **dadurch gekennzeichnet, dass** die Felge (1, 16), im Bereich der ersten und der zweiten Fusspunkte (23, 26) der Speichen (19) der ersten Speichengruppe (20, 21) einen anderen Felgenquerschnitt aufweist als, im Bereich der ersten und zweiten Fusspunkte (33, 37) der Speichen (19) der zweiten Speichengruppe (22, 200).

12. Fahrradlaufrad nach einem der vorangegangenen Ansprüche 7 bis 11, **dadurch gekennzeichnet, dass** die Speichen der ersten Speichengruppe (20, 21) zu einer Symmetrieebene (X) des Fahrradlaufrads einen Speichenwinkel Delta bilden und die Speichen der zweiten Speichengruppe (22, 200) einen Speichenwinkel Epsilon, wobei die beiden Speichenwinkel Delta und Epsilon im wesentlich gleich gross sind.

13. Fahrradlaufrad nach einem der vorangegangenen Ansprüche 7 bis 12, **dadurch gekennzeichnet, dass** das Zentrum (3, 25) durch zwei gegenüberliegende Zentrumsscheiben (39, 39'), eine auf der Bremsscheibenseite (30, 24) und eine auf der Nicht-Bremsscheibenseite (31, 28) gebildet wird, wobei die Zentrumsscheiben (39, 39 ') um einen Winkel gamma (γ) geneigt zu einer Achse w ausbildet sind, wobei der Winkel gamma (γ) einen Wert zwischen 6° bis 8° aufweist.

14. Fahrradlaufrad nach einem der vorangegangenen Ansprüche 7 bis 13, **dadurch gekennzeichnet, dass** der erste und der zweite Speichenabschnitt (2.1, 2.2, 2.1', 2.2', 29, 34) je einen Kreuzungspunkt (8) mit einem weiteren ersten und zweiten Speichenabschnitt (2.1, 2.2, 2.1', 2.2', 29, 34) bilden, wobei die Kreuzungspunkte (8) durch einzelne Lagen (2.3.1, 2.3.2, 2.1.1.; 2.1.2) der Speichenabschnitte (2.1, 2.3) gebildet werden, vorzugsweise aus mindestens vier Lagen.

15. Fahrradlaufrad nach Anspruch 14, **dadurch gekennzeichnet, dass** im Kreuzungspunkt (8) die Lagen (2.1.1, 2.1.2) des ersten Speichenabschnitts (2.1, 2.1', 21, 34) abwechselnd mit den Lagen (2.3.1, 2.3.2) des weiteren ersten Speichenabschnitts (2.1, 2.1', 21, 34) laminiert sind, sodass am Kreuzungspunkt (8) eine Verwebung entsteht.

16. Fahrradlaufrad nach einem der Ansprüche 7 bis 15, **dadurch gekennzeichnet, dass** die Felge (16, 160) einen asymmetrischen Felgenkörper (17) oder einen symmetrischen Felgenkörper (1') aufweist, vorzugsweise dieser Felgenkörper (17) als ein Hohlkörper ausgebildet ist.

17. Fahrradlaufrad nach Anspruch 16, **dadurch gekennzeichnet, dass** ein Abstand (X1) der ersten und zweiten Fusspunkte (4.1, 4.2) der ersten Speichengruppe (20) zum Scheitel (S) der Felge (1) grösser ist ein Abstand (X2) der ersten und zweiten Fusspunkte (4.1', 4.2') der zweiten Speichengruppe (200) oder dass ein Abstand (X1) der ersten und zweiten Fusspunkte (2.1, 2.2) der ersten Speichengruppe (20) zum Scheitel (S) der Felge (1) kleiner ist der Abstand (X2) der ersten und zweiten

18. Fahrradlaufrad nach einem der Ansprüche 7 bis 17 **dadurch gekennzeichnet, dass** es sich bei den Speichen um vorgespannte Speichen handelt, die Speichen eine Speichenhöhe (h) und eine Speichenbreite (b) aufweisen, wobei die Speichenhöhe (h) kleiner ist als die Speichenbreite (b), vorzugsweise das Verhältnis von Speichenhöhe zu Speichenbreite kleiner als 0.5 ist.

19. Fahrradlaufrad nach einem der Ansprüche 7 bis 18 **dadurch gekennzeichnet, dass** die Speichen als Druckspeichen ausgebildet sind.

## Claims

1. A method for manufacturing a bicycle wheel of a fiber composite material, wherein the laminating of a rim (1, 16, 160), of spokes (2) each comprising a first spoke section and a second spoke section (2.1, 2.1', 2.3, 29, 34; 2.2, 2.2', 32, 36), and a center (3, 25) having a first center disc and a second center disc (38, 38') is effected in one piece and in one step, by laying out in one step all fibers for the rim (1, 16, 160), the spokes (2) and the center (3, 25) in mold parts (9, 9.1, 9.2) provided for this purpose; followed by curing being effected, and after the curing removing the bicycle wheel comprising the rim (1, 16, 160), the spokes (2) and the center (3, 25) in one piece from the mold parts (9, 9.1, 9.2), wherein the spokes (2) are laminated and cured such that the first spoke section and the second spoke section (2.1, 2.1', 2.3, 29, 34; 2.2, 2.2', 32, 36) have a substantially straight shape.

2. The method according to claim 1, **characterized in that** in a second step, a pretensioning of the spokes (2) and the insertion of a hub (10) are executed.

3. The method according to claim 2, wherein the pretensioning of the spokes (2) is effected by pulling apart the two center discs (38, 38') in a horizontal direction approximately to the size of the subsequently inserted hub (10), before the hub (10) is inserted.

4. The method according to claim 1, **characterized in that** in a second step the insertion of the hub (10) is effected without pre-tensioning the spokes (2) in so doing.

5. The method according to any one of the preceding claims, **characterized in that** the spokes (2) are continuously laminated in such a manner that the fiber extent of the first spoke section and the second spoke section (2.1, 2.1', 2.3, 29, 34; 2.2, 2.2', 32, 36) extends continuously between base points (4.1, 4.1', 23, 33; 4.2, 4.2', 26, 37) arranged on the rim (1, 16, 160).

6. The method according to any one of the preceding claims, **characterized in that** the spokes (2) are laminated in cover-layer-free manner from a unidirectional roving.

7. A bicycle wheel manufactured by a method according to any one of claims 1 - 6, **characterized in that** the spokes (2) form a first spoke group and a second spoke group (20, 200), wherein the first spoke sections (2.1') of the spokes (2) of the second spoke group (200) extend between first base points (4.1', 4.2') arranged on the rim (1) on a non-brake disc side and the non-brake disc side (31) of the center (3) and the second spoke sections (2.2) extend between the non-brake disc side (31) of the center (3) and second base points (4.1', 4.2') arranged on the rim (1) on the non-brake disc side, and the first spoke sections (2.1, 2.1') of the spokes (2) of the first spoke group (20) extend between first base points (4.1, 4.2) arranged on the rim (1) on the brake disc side and the brake disc side (30) of the center (3), and the second spoke sections (2.2) extend between the brake disc side (30) of the center and second base points (4.2) arranged on the rim (1) on the brake disc side.

8. A bicycle wheel manufactured by a method according to any one of claims 1 - 6, **characterized in that** the spokes (19) form a first spoke group and a second spoke group (21, 22), wherein the first spoke sections (29) of the spokes (19) of the first spoke group (21) extend between first base points (23) arranged on the rim (16) on a non-brake disc side (28) and a brake disc side (24) of the center (25), and the second spoke sections (32) extend between the brake disc side (24) of the center (25) and second base points (26) arranged on the rim (16) on the non-brake disc side, and the first spoke sections (34) of the spokes (19) of the second spoke group (22) extend between first base points (33) arranged on the rim (16) on the brake disc side and the non-brake disc side (28) of the center (25), and the second spoke sections (36) extend between the non-brake disc side (28) of the center and second base points (37) arranged on the rim on the brake disc side.

9. The bicycle wheel according to claim 7 or 8, **characterized in that** the first and second base points (4.1, 4.2, 32, 29) of the first spoke group (20, 21) and/or the first and second base points (4.1', 4.2', 34, 36) of the second spoke group (200, 22) are arranged at a distance to an apex (S) of the rim (1, 160).

10. The bicycle wheel according to any one of the preceding claims 7-9, **characterized in that** the rim (1, 16) is configured to be not rotationally symmetrical with respect to an axis of rotation (D) of the bicycle wheel.

11. The bicycle wheel according to claim 10, **characterized in that** the rim (1, 16) has a different rim cross-section in the region of the first and second base points (23, 26) of the spokes (19) of the first spoke group (20, 21) than in the region of the first and second base points (33, 37) of the spokes (19) of the second spoke group (22, 200).

12. The bicycle wheel according to any one of the preceding claims 7 to 11, **characterized in that** the spokes of the first spoke group (20, 21) form a spoke angle delta with a plane of symmetry (X) of the bicycle wheel and the spokes of the second spoke group (22, 200) form a spoke angle epsilon, wherein the two spoke angles delta and epsilon are substantially equally large.

13. The bicycle wheel according to any one of the preceding claims 7 to 12, **characterized in that** the center (3, 25) is formed by two opposed center discs (39, 39'), one on the brake disc side (30, 24) and one on the non-brake disc side (31, 28), wherein the center discs (39, 39') are inclined by an angle gamma (y) to an axis w, wherein the angle gamma (y) has a value between 6° and 8°.

14. The bicycle wheel according to any one of the preceding claims 7 to 13, **characterized in that** the first and the second spoke sections (2.1, 2.2, 2.1', 2.2', 29, 34) each form a crossing point (8) with a further first and second spoke section (2.1, 2.2, 2.1', 2.2', 29, 34), wherein the crossing points (8) are formed by individual layers (2.3.1, 2.3.2, 2.1.1.; 2.1.2) of the spoke sections (2.1, 2.3), preferably from at least four layers.

15. The bicycle wheel according to claim 14, **characterized in that** at the crossing point (8), the layers (2.1.1, 2.1.2) of the first spoke section (2.1, 2.1', 21, 34) are laminated alternatingly with the layers (2.3.1, 2.3.2) of the further first spoke section (2.1, 2.1', 21, 34), so that an interweaving results at the crossing point (8).

16. The bicycle wheel according to any one of claims 7 to 15, **characterized in that** the rim (16, 160) has an asymmetrical rim body (17) or a symmetrical rim body (1'), said rim body (17) preferably being configured as a hollow body.

17. The bicycle wheel according to claim 16, **characterized in that** a distance (X1) of the first and second base points (4.1, 4.2) of the first spoke group (20) to the apex (S) of the rim (1) is greater than a distance (X2) of the first and second base points (4.1', 4.2') of the second spoke group (200), or that a distance (X1) of the first and second base points (2.1, 2.2) of the first spoke group (20) to the apex (S) of the rim (1) is smaller than the distance (X2) of the first and second.

18. The bicycle wheel according to any one of claims 7 to 17, **characterized in that** the spokes are pretensioned spokes, the spokes have a spoke height (h) and a spoke width (b), wherein the spoke height (h) is smaller than the spoke width (b), the ratio of spoke height to spoke width preferably being smaller than 0.5.

19. The bicycle wheel according to any one of claims 7 to 18, **characterized in that** the spokes are configured as compression spokes.

## Revendications

1. Procédé de fabrication d'une roue de bicyclette en matériau composite de fibres, cependant que le laminage d'une jante (1, 16, 160), de rayons (2) comportant chacun une première et une deuxième section de rayon (2.1, 2.1', 2.3, 29, 34; 2.2, 2.2', 32, 36), et d'un centre (3, 25) comportant un premier et un deuxième disque du centre (38, 38') est effectué en un seul tenant en une étape lors de laquelle toutes les fibres pour la jante (1, 16, 160), les rayons (2) et le centre (3, 25) sont, lors d'une étape du processus, déposées dans des pièces moulées (9, 9.1, 9.2) prévues à cet effet, à la suite de quoi un durcissement a lieu, et que, après le durcissement, la roue de bicyclette comprenant la jante (1, 16, 160), les rayons (2) et le centre (3, 25) est prélevée en un seul tenant des pièces moulées (9, 9.1, 9.2), cependant que les rayons (2) sont laminés et durcis de telle façon que la première et la deuxième section de rayon (2.1, 2.1', 2.3, 29, 34; 2.2, 2.2', 32, 36) présentent une forme essentiellement rectiligne.

2. Procédé selon la revendication 1, **caractérisé en ce que**, lors d'une deuxième étape, une précontrainte des rayons (2) et l'insertion d'un moyeu (10) sont effectuées.

3. Procédé selon la revendication 2, **caractérisé en ce que** la précontrainte des rayons (2) est effectuée, ce qui a lieu **en ce que** les deux disques du centre (38, 38') sont écartés l'un de l'autre dans le sens horizontal de manière à adopter, avant que le moyeu (10) soit inséré, approximativement la taille du moyeu (10) ensuite inséré.

4. Procédé selon la revendication 1, **caractérisé en ce que**, lors d'une deuxième étape, l'insertion du moyeu (10) est effectuée sans que les rayons (2) ne soient en l'occurrence précontraints.

5. Procédé selon une des revendications précédentes, **caractérisé en ce que** les rayons (2) sont laminés de telle façon de manière ininterrompue que le tracé des fibres de la première et deuxième section de rayon (2.1, 2.1', 2.3, 29, 34; 2.2, 2.2', 32, 36) est ininterrompu entre des points de base (4.1, 4.1', 23, 33; 4.2, 4.2', 26, 37) agencés à lajante (1, 16, 160).

6. Procédé selon une des revendications précédentes, **caractérisé en ce que** les rayons (2) sont laminés sans couche de recouvrement à partir d'un non tissé unidirectionnel.

7. Roue de bicyclette fabriquée par un procédé selon une des revendications 1-6, **caractérisée en ce que** les rayons (2) constituent un premier et un deuxième groupe de rayons (20, 200), cependant que les premières sections de rayon (2.1') des rayons (2) du deuxième groupe de rayons (200) sont disposées entre des premiers points de base (4.1', 4.2'), agencés à la jante (1) d'un côté non disque de frein, et le côté non disque de frein (31) du centre (3), et les deuxièmes sections de rayon (2.2) entre le côté non disque de frein (31) du centre (3) et des deuxièmes points de base (4.1', 4.2'), agencés à la jante (1) du côté non disque de frein, et que les premières sections de rayon (2.1, 2.1') des rayons (2) du premier groupe de rayons (20) sont disposées entre des premiers points de base (4.1, 4.2), agencés à la jante (1) du côté disque de frein, et le côté disque de frein (30) du centre (3), et les deuxièmes sections de rayon (2.2) entre le côté disque de frein (30) du centre et des deuxièmes points de base (4.2), agencés à la jante (1) du côté disque de frein.

8. Roue de bicyclette fabriquée par un procédé selon une des revendications 1-6, **caractérisée en ce que** les rayons (19) constituent un premier et un deuxième groupe de rayons (21, 22), cependant que les premières sections de rayon (29) des rayons (19) du premier groupe de rayons (21) sont disposées entre des premiers points de base (23), agencés à la jante (16) d'un côté non disque de frein (28), et un côté disque de frein (24) du centre (25), et les deuxièmes sections de rayon (32) entre le côté disque de frein (24) du centre (25) et des deuxièmes points de base (26), agencés à la jante (16) du côté non disque de frein , et que les premières sections de rayon (34) des rayons (19) du deuxième groupe de rayons (22) sont disposées entre des premiers points de base (33), agencés à la jante (16) du côté disque de frein , et le côté non disque de frein (28) du centre (25), et les deuxièmes sections de rayon (36) entre le côté non disque de frein (28) du centre et des deuxièmes points de base (37), agencés à la jante du côté disque de frein.

9. Roue de bicyclette selon la revendication 7 ou 8, **caractérisée en ce que** les premiers et deuxièmes points de base (4.1, 4.2, 32, 29) du premier groupe de rayons (20, 21) et/ou les premiers et deuxièmes points de base (4.1', 4.2', 34, 36) du deuxième groupe de rayons (200, 22) sont agencés de manière espacée par rapport à un sommet (S) de la jante (1, 160).

10. Roue de bicyclette selon une des revendications précédentes 7 à 9, **caractérisée en ce que** la jante (1, 16) est réalisée sans symétrie de révolution par rapport à l'axe de rotation (D) de la roue de bicyclette.

11. Roue de bicyclette la revendication 10, **caractérisée en ce que** la jante (1, 16) présente dans la zone des premiers et des deuxièmes points de base (23, 26) des rayons (19) du premier groupe de rayons (20, 21) une autre coupe transversale de jante que dans la zone des premiers et deuxièmes points de base (33, 37) des rayons (19) du deuxième groupe de rayons (22, 200).

12. Roue de bicyclette selon une des revendications précédentes de 7 à 11, **caractérisée en ce que** les rayons du premier groupe de rayons (20, 21) forment relativement à un plan de symétrie (X) de la roue de bicyclette un angle de rayon Delta, et les rayons du deuxième groupe de rayons (22, 200) un angle de rayon Epsilon, cependant que les deux angles de rayon Delta et Epsilon sont essentiellement de taille égale.

13. Roue de bicyclette selon une des revendications précédentes de 7 à 12, **caractérisée en ce que** le centre (3, 25) est constitué par deux disques du centre (39, 39') se faisant face, un du côté disque de frein (30, 24) et un du côté non disque de frein (31, 28), cependant que les disques du centre (39, 39') sont réalisés de façon inclinés d'un angle gamma (γ) par rapport à un axe w, cependant que l'angle gamma (γ) a une valeur comprise entre 6 et 8°.

14. Roue de bicyclette selon une des revendications précédentes de 7 à 13, **caractérisée en ce que** la première et la deuxième section de rayon (2.1, 2.2, 2.1', 2.2',29, 34) constituent chacune un point de croisement (8) avec une autre première et deuxième section de rayon (2.1, 2.2, 2.1', 2.2',29, 34), cependant que les points de croisement (8) sont constitués par des strates (2.3.1, 2.3.2, 2.1.1 ; 2.1.2) individuelles des sections de rayon (2.1, 2.3), de préférence par au moins quatre strates.

15. Roue de bicyclette selon la revendication 14, **caractérisée en ce que**, dans le point de croisement (8), les strates (2.1.1, 2.1.2) de la première section de rayon (2.1, 2.1', 21, 34) sont laminées en alternance avec les strates (2.3.1, 2.3.2) de l'autre première section de rayon (2.1, 2.1', 21, 34), de telle sorte que, au point de croisement (8), un entrelacement est engendré.

16. Roue de bicyclette selon une des revendications de 7 à 15, **caractérisée en ce que** lajante (16, 160) présente un corps de jante (17) asymétrique ou un corps de jante (1') symétrique , de préférence que ce corps de jante (17) est réalisé sous forme d'un corps creux.

17. Roue de bicyclette selon la revendication 16, **caractérisée en ce qu'**un espacement (X1) des premiers et deuxièmes points de base (4.1, 4.2) du premier groupe de rayons (20) par rapport au sommet (S) de la jante (1) est supérieur à un espacement (X2) des premiers et deuxièmes points de base (4.1', 4.2') du deuxième groupe de rayons (200), ou qu'un espacement (X1) des premiers et deuxièmes points de base (2.1, 2.2) du premier groupe de rayons (20) par rapport au sommet (S) de la jante (1) est inférieur à l'espacement (X2) des premiers et deuxièmes.

18. Roue de bicyclette selon une des revendications de 7 à 17, **caractérisée en ce que** les rayons consistent en des rayons précontraints, que les rayons ont une hauteur de rayon (h) et une largeur de rayon (b), cependant que la hauteur de rayon (h) est inférieure à la largeur de rayon (b), le rapport entre hauteur de rayon et largeur de rayon étant de préférence inférieur à 0,5.

19. Roue de bicyclette selon une des revendications de 7 à 18, **caractérisé en ce que** les rayons sont réalisés en tant que rayons de compression.
